# EUROPEAN PATENT APPLICATION

(11) **EP 4 592 088 A1**
(43) Date of publication of application: **30.07.2025**
(21) Application number: 23868039.1
(22) Date of filing: 05.09.2023
(51) Int. Cl.: B41M 5/00, B41J 2/01, B41J 2/21, C09D 11/322

(54) **IMAGE RECORDING METHOD AND IMAGE RECORDING DEVICE**

(30) Priority: 21.09.2022 JP 2022150263
(71) Applicant: FUJIFILM Corporation, Tokyo 106-8620 (JP)
(72) Inventor: HOUJOU, Hiroaki, Ashigarakami-gun, Kanagawa 258-8577 (JP); IKOSHI, Masao, Ashigarakami-gun, Kanagawa 258-8577 (JP); MIZOE, Taiga, Ashigarakami-gun, Kanagawa 258-8577 (JP)
(74) Representative: Klunker IP Patentanwälte PartG mbB
(86) International application number: PCT/JP2023/032378
(87) International publication number: WO 2024/062915

(57) **Abstract**

An image recording method includes: a recording step of applying a white ink containing water, a white pigment, and a resin onto one surface of a non-permeable substrate by an ink jet method and heating and drying the applied white ink to record a white image, and in a case where a viscosity of a concentrated ink obtained by concentrating the white ink until a mass of the white ink is 30% is denoted by X mPa·s and a temperature rising rate from a start point of the heating and drying to a point of 5 seconds later is denoted by Y °C/s, a product of X and Y is 30 to 280.

## Description

### BACKGROUND OF THE INVENTION

### 1. Field of the Invention

The present disclosure relates to an image recording method and an image recording apparatus.

### 2. Description of the Related Art

In the related art, various studies have been conducted on an image recording method and an image recording apparatus.

For example, WO2020/137323A discloses the following method of manufacturing a printed article as a method of manufacturing a printed article in which a high-quality printed article with a back print is obtained.

In the manufacturing method of a printed article disclosed in WO2020/137323A, a first treatment liquid containing an aggregating agent that aggregates a color ink and a white ink is applied to a non-permeable medium, the color ink is applied to the non-permeable medium onto which the first treatment liquid has been applied to print an image, and the white ink is applied to the non-permeable medium onto which the color ink has been applied. In a case in which a total amount of an applied amount of the color ink and an applied amount of the white ink exceeds a threshold value, a second treatment liquid containing at least the aggregating agent that aggregates the white ink is applied to the non-permeable medium after the color ink is applied and before the white ink is applied.

In addition, JP2021-017005A discloses the following recording method as a recording method in which lamination resistance is ensured in a back printing mode on a transparent flexible packaging film.

The recording method disclosed in JP2021-017005A is a recording method of performing recording on a recording medium used by laminating a recording surface on which recording has been performed, and comprises a non-white ink adhering step of causing an aqueous non-white ink composition containing a non-white coloring material to adhere to the recording medium, a white ink adhering step of causing an aqueous white ink composition containing a white coloring material to adhere to the recording medium on which the non-white ink adhering step has been performed, and a clear ink adhering step of causing a clear ink composition containing a resin to adhere to the recording medium on which the white ink adhering step has been performed.

In addition, WO2019/131204A discloses the following ink jet printer as an ink jet printer for both front printing and back printing, which can perform both front printing and back printing with an aqueous ink while continuously transporting a web-shaped printing substrate at high speed.

The ink jet printer disclosed in WO2019/131204A comprises a first white ink jet head that jets a white aqueous ink onto a surface of a web-shaped printing substrate in a case of front printing, a first drum-type drying unit that dries the white aqueous ink in a case of front printing, a second white ink jet head that jets a white aqueous ink onto a surface of a web-shaped printing substrate in a case of back printing, and a second drum-type drying unit that dries the white aqueous ink in a case of back printing.

### SUMMARY OF THE INVENTION

However, in an image recording method of applying a white ink containing water, a white pigment, and a resin onto one surface of a non-permeable substrate by an ink jet method and heating and drying the applied white ink to record a white image, there is a demand for further improving the covering property and the adhesiveness of the recorded white image.

Here, the covering property of the white image means the performance of covering the color of the base onto which the white image is recorded (for example, a non-permeable substrate, a colored image recorded before the white image, and the like, the same applies hereinafter), and the adhesiveness of the white image means the adhesiveness of the white image to the base on which the white image is recorded.

The present disclosure has been made in view of such circumstances, and an object of the present disclosure is to provide an image recording method and an image recording apparatus that can record a white image with excellent covering property and adhesiveness in a case of applying a white ink containing water, a white pigment, and a resin onto one surface of a non-permeable substrate by an ink jet method and heating and drying the applied white ink to record a white image.

The present disclosure includes the following aspects.
<1> An image recording method comprising:
   a recording step of applying a white ink containing water, a white pigment, and a resin onto one surface of a non-permeable substrate by an ink jet method and heating and drying the applied white ink to record a white image,
   in which, in a case where a viscosity at 32°C of a concentrated ink obtained by concentrating the white ink until a mass of the white ink is reduced by 30% is denoted by X mPa·s and a temperature rising rate from a start point of the heating and drying to a point of 5 seconds later is denoted by Y °C/s, a product of X and Y is 30 to 280.
<2> The image recording method according to <1>,
   in which the product of the X and the Y is 40 to 200.
<3> The image recording method according to <1> or <2>,
   in which the heating and drying is performed by blowing hot air, and in a case where a value obtained by dividing a wind speed of the hot air in a unit of m/s by a temperature of the hot air in a unit of °C is denoted by Z, a product of the X and Z is 2.0 to 10.0.
<4> The image recording method according to <3>,
   in which the product of the X and the Z is 3.5 to 7.5.
<5> The image recording method according to any one of <1> to <4>,
   in which a value obtained by dividing a film thickness of the white ink applied onto the one surface of the non-permeable substrate after the heating and drying by a film thickness of the white ink applied onto the one surface of the non-permeable substrate before the heating and drying is 0.10 to 0.20.
<6> The image recording method according to any one of <1> to <5>,
   in which the film thickness of the white ink applied onto the one surface of the non-permeable substrate after the heating and drying is 1.30 µm to 1.80 µm.
<7> The image recording method according to any one of <1> to <6>,
   in which the recording step further includes transporting the non-permeable substrate onto which the white ink has been applied by a transport member so as to be in a disposition in which the transport member and the white ink are in contact with each other,
   the image recording method further includes a winding step of winding the non-permeable substrate onto which the white image has been recorded after the recording step, and
   an average contact surface pressure between the transport member and the white ink during a period from the application of the white ink to the winding of the non-permeable substrate is 750 N/m² to 4000 N/m².
<8> The image recording method according to any one of <1> to <7>,
   in which the recording step further includes recording a colored image by applying a colored ink containing water, a coloring pigment, and a resin onto the one surface of the non-permeable substrate by an ink jet method.
<9> The image recording method according to <8>,
   in which the colored image is recorded before the white image and is disposed between the non-permeable substrate and the white image.
<10> The image recording method according to any one of <1> to <9>, further comprising:
   before the recording step, a step of applying a pretreatment liquid containing water and an aggregating agent onto the one surface of the non-permeable substrate,
   in which, in the recording step, the white ink is applied onto a region on the one surface onto which the pretreatment liquid has been applied, to record the white image.
<11> An image recording apparatus that is used for the image recording method according to any one of <1> to <10>, the image recording apparatus comprising:
   an ink jet head configured to apply the white ink onto the one surface of the non-permeable substrate; and
   a heating and drying device configured to perform heating and drying on the applied white ink,
   in which the product of the X and the Y is 30 to 280.

According to an embodiment of the present disclosure, there are provided an image recording method and an image recording apparatus that can record a white image with excellent covering property and adhesiveness in a case of applying a white ink containing water, a white pigment, and a resin onto one surface of a non-permeable substrate by an ink jet method and heating and drying the applied white ink to record a white image.

### BRIEF DESCRIPTION OF THE DRAWINGS

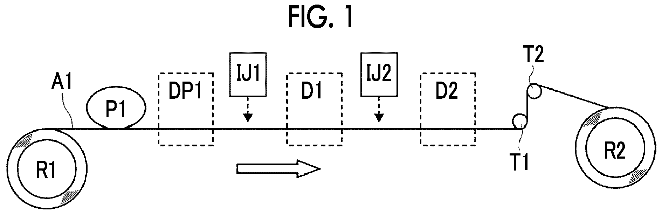

Fig. 1 is a diagram conceptually showing an example of an image recording apparatus used for performing an image recording method according to the present disclosure.

### DESCRIPTION OF THE PREFERRED EMBODIMENTS

In the present disclosure, the numerical ranges shown using "to" means ranges including the numerical values described before and after "to" as the minimum value and the maximum value.

In a numerical range described in a stepwise manner in the present specification, an upper limit value or a lower limit value described in a certain numerical range may be replaced with an upper limit value or a lower limit value in another numerical range described in a stepwise manner. In addition, in the numerical range described in the present specification, an upper limit value and a lower limit value described in a certain numerical range may be replaced with values shown in Examples.

In the present disclosure, in a case in which a plurality of substances corresponding to respective components in a composition are present, the amount of the respective components in the composition means the total amount of the plurality of substances present in the composition unless otherwise specified.

In the present disclosure, a combination of two or more preferred aspects is a more preferred aspect.

In the present disclosure, the meaning of the term "step" includes not only an independent step but also a step whose intended purpose is achieved even in a case in which the step is not clearly distinguished from other steps.

In the present disclosure, "image" means an ink film itself in a case where a pretreatment liquid is not used, and means a laminated film of a pretreatment liquid film and an ink film in a case where the pretreatment liquid is used.

In the present disclosure, "image recording" means formation of the image.

The concept of "image" in the present disclosure also includes a solid image.

In the present disclosure, the description of "applying the ink onto one surface of the substrate" includes an aspect in which the ink is directly applied onto one surface of the substrate and an aspect in which, for example, in a case where the layer A is formed on one surface of the substrate, the ink is directly applied onto the surface of the layer A.

In the present disclosure, "upstream side" means an upstream side of a non-permeable substrate in a transport direction unless otherwise specified, and "downstream side" means a downstream side of a non-permeable substrate in the transport direction unless otherwise specified.

### [Image Recording Method]

The image recording method of the present disclosure (hereinafter, also referred to as a "recording method") include
a recording step of applying a white ink containing water, a white pigment, and a resin onto one surface (hereinafter, also referred to as a "front surface" or a "recording surface") of a non-permeable substrate by an ink jet method, and heating and drying the applied white ink to record a white image,
in which in a case where a viscosity of a concentrated ink obtained by concentrating the white ink until a mass at 32°C thereof is reduced by 30% is defined as X mPa·s, and a temperature rising rate from a start point of the heating and drying to a point of 5 seconds later is defined as Y °C/s, a product of X and Y is 30 to 280.

According to the recording method of the present disclosure, it is possible to record a white image having excellent covering property (that is, property of covering a base color) and excellent adhesiveness (that is, adhesiveness to a non-permeable substrate).

Specifically, in the recording method of the present disclosure, the covering property of the obtained white image is improved by setting the product of X and Y (hereinafter, also referred to as "product (X * Y)") to 30 or more, and the adhesiveness of the obtained white image is improved by setting the product (X * Y) to 280 or less.

The reason why the covering property of the obtained white image is improved by making the product (X * Y) equal to or more than 30 is considered as follows.

X (that is, the viscosity of the concentrated ink obtained by concentrating the white ink until the mass at 32°C is reduced by 30%) is a viscosity that imitates the viscosity of the white ink during drying by heating and drying. It is considered that in a case where the X is too small, the white pigment is likely to precipitate in a film formed of the white ink (hereinafter, also referred to as a white ink film), and as a result, the film thickness of the white ink film is reduced, and the covering property of the white image tends to be degraded.

In addition, it is considered that in a case where Y (that is, a temperature rising rate from a start point of heating and drying to a point of 5 seconds later) is too small, drying (that is, volatilization of a solvent) is delayed, the white pigment is likely to precipitate in the white ink film, and the covering property of the white image tends to decrease.

It is considered that, with respect to these tendencies, by setting the product (X * Y) to 30 or more, the precipitation of the white pigment in the white ink film is suppressed, and as a result, the covering property of the obtained white image is secured.

The reason why the adhesiveness of the obtained white image is improved by setting the product (X * Y) to 280 or less is considered as follows.

It is considered that as X increases, the covering property of the white image is advantageous, but the film thickness of the white ink film tends to increase, the film quality tends to deteriorate, and the adhesiveness of the white image tends to decrease.

In addition, in a case where Y is too large, it is considered that the drying is too fast, the leathering in the white ink film is likely to be occur, the drying inside the white ink film is insufficient, and the adhesiveness of the white image tends to decrease.

It is considered that, with respect to these tendencies, in a case where the product (X * Y) is set to 280 or less, the leathering, the insufficient internal drying, and the deterioration of the film quality of the white ink film are suppressed, and as a result, the adhesiveness of the obtained white image (the adhesiveness to the non-permeable substrate) is secured.

### <Product (X * Y)>

As described above, in the recording method of the present disclosure, the product (X * Y) is 30 to 280.

In a case where the product (X * Y) is 30 or more, the covering property of the obtained white image is improved.

In a case where the product (X * Y) is 280 or less, the adhesiveness of the obtained white image is improved.

The product (X * Y) is preferably 40 to 200.

In a case where the product (X * Y) is 40 or more, the covering property of the obtained white image is further improved.

In a case where the product (X * Y) is 280 or less, the adhesiveness of the obtained white image is further improved.

"X" in the product (X * Y) is a viscosity (unit: mPa·s) of the concentrated ink obtained by concentrating the white ink until the mass at 32°C is reduced by 30%.

Here, "concentrated" means that a part of the solvent in the white ink (that is, water and, in a case of being contained, a water-soluble organic solvent, same applies below) is removed.

That is, the concentrated ink is an ink obtained by removing (for example, distilling) 30% of a solvent with respect to the total mass of the white ink from the white ink.

The viscosity of the concentrated ink at 32°C is measured using a viscometer (for example, a TV-22 type viscometer manufactured by TOKI-SANGYO Co., Ltd.).

In the recording method of the present disclosure, the degree of concentration of the white ink (that is, the removal of the solvent) for obtaining "X" is set to "decrease by 30%", thereby improving the accuracy of the relationship between the product (X * Y) and the effect (the covering property and the adhesiveness of the white image).

It is considered that in a case where the degree of concentration (that is, the removal of the solvent) is not "decrease by 30%" but, for example, "decrease by 20% or less", the fluidity of the white ink is not lost yet, and the accuracy of the relationship between the product (X * Y) and the effect is insufficient.

In a case where the degree of concentration (that is, the removal of the solvent) is not "decrease by 30%" but, for example, "decrease by 40% or more", it may be difficult to discriminate the difference in fluidity of the white ink, and it is considered that the accuracy of the relationship between the product (X * Y) and the effect is insufficient.

"X" in the product (X * Y) is preferably 10.0 to 20.0, more preferably 10.0 to 19.0, and still more preferably 11.0 to 17.0.

"Y" in the product (X * Y) is a temperature rising rate (unit: °C/s) from the start point of heating and drying to a time point when 5 seconds elapses.

The temperature rising rate means a temperature rising rate of the surface of the white ink film to be heated and dried.

The temperature of the surface of the white ink film is measured using a non-contact thermometer (for example, FT-H20 manufactured by KEYENCE CORPORATION).

In the present disclosure, the accuracy of the relationship between the product (X * Y) and the effect is increased by defining "Y" as a temperature rising rate from the start point of heating and drying to a time point when "5 seconds" elapses.

In a case where Y is defined to be shorter than "5 seconds" (for example, "3 seconds or less"), it is considered that the accuracy of the temperature rising rate is insufficient.

It is considered that the temperature rise may be slowed down even in a case where Y is defined to be longer than "5 seconds" (for example, "7 seconds or more"), and the accuracy of the rate is insufficient.

"Y" in the product (X * Y) is preferably 1.0 to 25.0, more preferably 1.5 to 20.0, and still more preferably 2.0 to 15.0.

### <Recording Step>

The recording step is a step of applying a white ink containing water, a white pigment, and a resin onto the front surface of the non-permeable substrate by an ink jet method and heating and drying the applied white ink to record a white image.

### (Non-Permeable Substrate)

In the present disclosure, impermeability of the non-permeable substrate denotes a property that a water absorption rate in 24 hours, which is measured in conformity with ASTM D570-98 (2018), is 2.5% or less. Here, the unit "%" of the water absorption rate is on a mass basis. The above-described water absorption rate is preferably 1.0% or less and more preferably 0.5% or less.

Examples of a material of the non-permeable substrate include glass, a metal (such as aluminum, zinc, and copper), and a resin (such as polyvinyl chloride, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, nylon, and an acrylic resin).

It is preferable that the material of the non-permeable substrate is a resin. That is, the non-permeable substrate is preferably a non-permeable substrate.

Among these, from the viewpoint of general-purpose properties, the material of the non-permeable substrate is preferably polypropylene, polyethylene, polyethylene terephthalate, nylon, an acrylic resin, or polyvinyl chloride.

As a shape of the non-permeable substrate, a sheet-like (film-like) or a plate-like non-permeable substrate is preferable. Examples of the non-permeable substrate having such a shape include a glass plate, a metal plate, a resin sheet (resin film), paper on which plastic is laminated, paper on which a metal is laminated or vapor-deposited, and a plastic sheet (plastic film) on which a metal is laminated or vapor-deposited.

Examples of the non-permeable substrate made of a resin include a resin sheet (resin film), and more specific examples thereof include a flexible packaging material for packaging food or the like, and a panel for guiding the floor of a mass retailer.

Examples of the non-permeable substrate also include a textile (woven fabric) or nonwoven fabric formed of impermeable fibers, in addition to the sheet-like (film-like) or plate-like non-permeable substrate.

A thickness of the non-permeable substrate is preferably 0.1 µm to 1,000 µm, more preferably 0.1 µm to 800 µm, and still more preferably 1 µm to 500 µm.

At least one of the front surface or the back surface of the non-permeable substrate may be subjected to a surface treatment.

Examples of the surface treatment include a corona treatment, a plasma treatment, a flame treatment, a heat treatment, an abrasion treatment, and a light irradiation treatment (such as a UV treatment), but the surface treatment is not limited thereto. The corona treatment can be performed, for example, using CORONA MASTER (product name "PS-10S", manufactured by Shinko Electric & Instrumentation Co., Ltd.).

The conditions for the surface treatment may be appropriately selected depending on the kind of the non-permeable substrate and the like.

In addition, the surface energy of the back surface of the non-permeable substrate may be adjusted depending on whether or not the back surface of the non-permeable substrate is subjected to the surface treatment and the conditions for the surface treatment in a case of performing the surface treatment, and thus, the ΔE and the ΔE/P ratio may be adjusted.

The non-permeable substrate may be a non-permeable substrate having transparency.

Here, the expression of "having transparency" denotes that a transmittance in visible light having a wavelength of 400 nm to 700 nm is 80% or more (preferably 90% or more).

In a case where the non-permeable substrate is a non-permeable substrate having transparency, the image is easily visually recognized through the non-permeable substrate from a back surface side of the non-permeable substrate.

For example, in a case where the non-permeable substrate is a non-permeable substrate having transparency, in a case where a colored image, which is a pattern image such as a character or a figure, and a white image (for example, a solid image) as a background image are recorded on the front surface of the non-permeable substrate in this order as viewed from the non-permeable substrate side, the colored image (for example, a pattern image such as a character or a figure) having the white image (for example, a solid image) as a background is easily visually recognized through the non-permeable substrate from the back surface side of the non-permeable substrate.

In the present disclosure, the "colored" in the colored ink and the coloring pigment means a chromatic color (for example, cyan, magenta, yellow, and the like) or a black color (hereinafter, also referred to as black).

### (White Ink)

The white ink contains water, a white pigment, and a resin.

Hereinafter, the white ink will be described.

### -Water-

The white ink contains water.

A content of the water is preferably 10% by mass or more, more preferably 20% by mass or more, still more preferably 30% by mass or more, and particularly preferably 50% by mass or more with respect to the total amount of the white ink.

The upper limit of the content of the water is appropriately determined according to contents of other components, and is, for example, 99% by mass, preferably 95% by mass, and more preferably 90% by mass with respect to the total amount of the white ink.

### -White Pigment-

The white ink contains at least one white pigment.

Examples of the white pigment include inorganic pigments such as titanium dioxide, barium sulfate, calcium carbonate, silica, zinc oxide, zinc sulfide, mica, talc, and pearl.

The white pigment is preferably titanium dioxide, barium sulfate, calcium carbonate, or zinc oxide, and more preferably titanium dioxide.

From the viewpoint of covering property, an average primary particle diameter of the white pigment is preferably 150 nm or more, and more preferably 200 nm or more. In addition, from the viewpoint of j ettability of the ink, the average primary particle diameter of the white pigment is preferably 400 nm or less, and more preferably 350 nm or less.

Here, the covering property means a performance of covering a base (for example, the front surface of the non-permeable substrate or the colored image recorded on the front surface before the white image) on which the white image is formed, with the white image.

In the present disclosure, the average primary particle diameter of the white pigment is a value measured using a transmission electron microscope (TEM). Specifically, the average primary particle diameter of the white pigment is a value determined by selecting 50 optional particles of the white pigment present in a visual field observed by the TEM, measuring primary particle diameters of the 50 particles, and averaging the measured diameters. As the transmission electron microscope, a transmission electron microscope 1200EX manufactured by JEOL Ltd. can be used.

In a case where the ink contains the white pigment, from the viewpoint of image density and jettability, a content of the white pigment is preferably 2% by mass to 25% by mass, more preferably 5% by mass to 25% by mass, and still more preferably 10% by mass to 20% by mass with respect to the total amount of ink.

### -Resin-

The white ink contains at least one resin.

The resin in the white ink contributes to the film forming property of the white ink (that is, the film formability of the white ink film).

A weight-average molecular weight (Mw) of the resin is preferably 1,000 to 300,000, more preferably 2,000 to 200,000, and still more preferably 5,000 to 100,000.

In the present disclosure, the weight-average molecular weight (Mw) indicates a value measured according to gel permeation chromatography (GPC) unless otherwise specified.

For the measurement by gel permeation chromatography (GPC), HLC (registered trademark)-8020GPC (manufactured by Tosoh Corporation) is used as a measuring device, three columns of TSKgel (registered trademark) Super Multipore HZ-H (4.6 mmID x 15 cm, manufactured by Tosoh Corporation) are used as a column, and tetrahydrofuran (THF) is used as an eluant. In addition, as the measurement conditions, a sample concentration of 0.45% by mass, a flow rate of 0.35 ml/min, a sample injection amount of 10 µl, and a measurement temperature of 40°C are set, and an RI detector is used.

Further, the calibration curve is created using eight samples of "F-40", "F-20", "F-4", "F-1", "A-5000", "A-2500", "A-1000", and "n-propylbenzene" which are "Standard Samples TSK standard, polystyrene" (manufactured by Tosho Corporation).

Examples of the resin include a pigment dispersing resin as a pigment dispersing agent.

Examples of the resin also include resin particles.

The white ink may contain at least one pigment dispersing resin.

The pigment dispersing resin is a resin having a function of dispersing a pigment.

The pigment dispersing resin may be a random copolymer or a block copolymer.

The pigment dispersing resin may have a crosslinking structure.

The ink may be prepared using a pigment dispersion liquid containing a pigment and a pigment dispersing resin.

As the pigment dispersing resin, for example, known polymer dispersing agents, such as polymer dispersing agents described in paragraphs 0029 to 0106 of WO2021/221069A, can be used.

In a case where the white ink contains the pigment dispersing resin, a ratio of a content of the pigment and a content of the pigment dispersing resin in the ink is preferably 1:0.04 to 1:3, more preferably 1:0.05 to 1:1, and still more preferably 1:0.05 to 1:0.5 on a mass basis.

In a case where the white ink contains the pigment dispersing resin, the content of the pigment dispersing resin is preferably 0.1% by mass to 10% by mass, more preferably 0.3% by mass to 5% by mass, and still more preferably 0.5% by mass to 2.5% by mass with respect to the total amount of the ink.

The white ink may contain at least one kind of resin particles.

A resin constituting the resin particles is preferably a water-insoluble resin. The "water-insoluble" in the water-insoluble resin means a property that an amount dissolved in 100 g of distilled water at 25°C is less than 2 g.

A volume average particle diameter of the resin particles is preferably 1 nm to 300 nm, more preferably 3 nm to 200 nm, and still more preferably 5 nm to 150 nm.

In the present disclosure, the volume average particle diameter means a value measured using a laser diffraction/scattering type particle size distribution analyzer.

As the measuring device, a particle size distribution measuring device "MICROTRAC MT-3300II" (manufactured by Nikkiso Co., Ltd.) is exemplified.

It is preferable that the resin particles are at least one selected from the group consisting of acrylic resin particles, ester resin particles, a mixture of acrylic resin particles and ester resin particles, composite particles containing an acrylic resin and an ester resin, styrene-acrylic resin particles, and polyurethane resin particles.

In the present disclosure, the acrylic resin means a polymer (homopolymer or copolymer) of a raw monomer including at least one selected from the group consisting of acrylic acid, a derivative of acrylic acid (for example, acrylic acid ester, and the like), methacrylic acid, and a derivative of methacrylic acid (for example, methacrylic acid ester, and the like).

From the viewpoint of further improving rub resistance of the image, a glass transition temperature (Tg) of the resin particles is preferably 50°C to 250°C and more preferably 50°C to 150°C.

Here, a measurement Tg obtained by actual measurement is employed as the glass transition temperature (Tg) of the resin particles. For a measurement method of the measurement Tg, paragraph 0111 of JP2015-25076A can be referred to.

For the resin particles, for example, descriptions described in paragraphs 0038 to 0114 of WO2021/192720A and paragraphs 0109 to 0120 of JP2015-25076A may be referred to.

In a case where the white ink contains the resin particles, a content of the resin particles in the white ink is preferably 1% by mass to 20% by mass, more preferably 2% by mass to 15% by mass, and still more preferably 2% by mass to 10% by mass with respect to the total amount of the white ink.

### -Water-soluble organic solvent-

It is preferable that the white ink contains at least one water-soluble organic solvent.

In this manner, jetting stability from the ink jet head is ensured.

The water-soluble organic solvent contained in the white ink may be used alone or in combination of two or more kinds thereof.

In the present disclosure, "water-soluble" in the "water-soluble organic solvent" means a property of being dissolved in 1 g or more in 100 g of water at 25°C.

The type of the water-soluble organic solvent which can be contained in the white ink is not limited, and examples thereof include;
a monoalcohol having 1 to 4 carbon atoms;
diols such as 1,2-ethanediol (another name: ethylene glycol), 1,3-propanediol (another name: propylene glycol), 1,3-butanediol, 1,4-butanediol, 2-butene-1,4-diol, 2-ethyl-1,3-hexanediol, 2-methyl-2,4-pentanediol, 1,2-octanediol, 1,2-hexanediol, 1,2-pentanediol, and 4-methyl-1,2-pentanediol;
triols such as glycerin, 1,2,6-hexanetriol, and trimethylolpropane;
alkylene glycol monoalkyl ethers such as ethylene glycol monoalkyl ether and propylene glycol monoalkyl ether;
polyalkylene glycol such as diethylene glycol, triethylene glycol, tetraethylene glycol, pentaethylene glycol, dipropylene glycol, or polyoxyethylene polyoxypropylene glycol;
polyalkylene glycol ether such as diethylene glycol monoalkyl ether, triethylene glycol monoalkyl ether, tripropylene glycol monoalkyl ether, or polyoxypropylene glyceryl ether;
2-pyrrolidone, and N-methyl-2-pyrrolidone; and the like.

From the viewpoint of jetting stability, the water-soluble organic solvent in the white ink preferably contains at least one selected from the group consisting of a diol and an alkylene glycol monoalkyl ether.

A content of the water-soluble organic solvent is preferably 10% by mass to 40% by mass and more preferably 15% by mass to 30% by mass with respect to the total amount of the white ink.

### -Surfactant-

The white ink may contain at least one kind of surfactant.

Examples of the surfactant include a nonionic surfactant, a cationic surfactant, an anionic surfactant, and a betaine surfactant.

Preferred examples of the surfactant include an acetylene glycol-based surfactant, which is a kind of a nonionic surfactant.

As the acetylene glycol-based surfactant, for example, the acetylene glycol-based surfactants described in paragraphs 0070 to 0080 of WO2017/149917A can be used.

Examples of the acetylene glycol-based surfactant include
a polyalkylene oxide adduct (preferably a polyethylene oxide adduct) of 2,4,7,9-tetramethyl-5-decyne-4,7-diol,
a polyalkylene oxide adduct (preferably a polyethylene oxide adduct) of 3,6-dimethyl-4-octyne-3,6-diol,
a polyalkylene oxide adduct (preferably a polyethylene oxide adduct) of 2,5,8,11-tetramethyl-6-dodecyne-5,8-diol, and
a polyalkylene oxide adduct (preferably a polyethylene oxide adduct) of 2,5-dimethyl-3-hexyne-2,5-diol.

Examples of commercially available products of the acetylene glycol-based surfactant include the SURFYNOL Series (such as SURFYNOL 420, SURFYNOL 440, SURFYNOL 465, and SURFYNOL 485), OLFINE Series (such as OLFINE E1010 and OLFINE E1020), and DYNOL Series (such as DYNOL 604) (all manufactured by Air Products and Chemicals Inc. or Nissin Chemical Co., Ltd.), and ACETYLENOL (manufactured by Kawaken Fine Chemicals Co., Ltd.).

Commercially available products of the acetylene glycol-based surfactants are also provided by the Dow Chemical Company, General Aniline & Film Corporation, and the like.

Examples of the surfactant include compounds exemplified as surfactants in pp. 37 and 38 of JP1984-157636A (JP-S59-157636A) and Research Disclosure No. 308119 (1989). Further, other examples of the surfactant include fluorine-based (fluorinated alkyl-based) surfactants and silicone-based surfactants described in JP2003-322926A, JP2004-325707A, and JP2004-309806A.

In a case where the white ink contains a surfactant, the content of the surfactant in the white ink is appropriately adjusted in consideration of the surface energy of the white image to be recorded.

The content of the surfactant in the white ink is preferably in a range of 0.01% by mass to 5% by mass, more preferably in a range of 0.05% by mass to 3% by mass, and still more preferably in a range of 0.1% by mass to 2% by mass with respect to the total amount of the white ink.

### -Other Components-

The white ink may contain components other than the components described above.

Examples of other components include known additives such as a silicic acid compound (such as silicic acid compounds described in paragraphs 0058 to 0075 of JP5430316B), urea, a urea derivative, a wax, a fading inhibitor, an emulsion stabilizer, a penetration enhancer, an ultraviolet absorbing agent, a preservative, a fungicide, a pH adjuster, an antifoaming agent, a viscosity adjuster, a dispersion stabilizer, and a chelating agent.

### -Physical Properties-

From the viewpoint of improving the jetting stability, the pH (25°C) of the white ink is preferably in a range of 7 to 10 and more preferably in a range of 7.5 to 9.5. The pH of the ink can be measured by the same method as that for the pH of the pretreatment liquid.

The viscosity (32°C) of the white ink is preferably in a range of 0.5 mPa·s to 30 mPa·s, more preferably in a range of 2 mPa·s to 20 mPa·s, still more preferably in a range of 2 mPa·s to 15 mPa·s, and even still more preferably in a range of 3 mPa·s to 10 mPa·s.

The viscosity of the white ink is measured using a viscometer (for example, a TV-22 type viscometer manufactured by TOKI-SANGYO Co., Ltd.).

The surface tension (25°C) of the white ink is preferably 60 mN/m or less, more preferably in a range of 20 mN/m to 50 mN/m, and still more preferably in a range of 25 mN/m to 40 mN/m.

The surface tension is measured at 25°C using a surface tension meter, for example, by a plate method using an automatic surface tension meter (trade name, "CBVP-Z") manufactured by Kyowa Interface Science Co., Ltd.

### (Application of White Ink)

The recording step includes applying the white ink onto the front surface of the non-permeable substrate by an ink jet method.

The ejection method of the white ink by the ink jet method is not particularly limited, and for example, any known methods such as an electric charge control method of jetting the ink using electrostatic attraction force, a drop-on-demand method (pressure pulse method) using vibration pressure of a piezoelectric element, an acoustic ink jet method of converting an electric signal into an acoustic beam and irradiating the ink with the acoustic beam to jet the ink by using radiation pressure, a thermal ink jet method (BUBBLE JET (registered trademark)) of heating the ink, forming bubbles, and using generated pressure, and the like may be used.

As the ink jet method, particularly, it is possible to effectively use the method described in JP1979-59936A (JP-S54-59936A), which is an ink jet recording method of causing an ink to be subjected to a rapid volume change by the action of thermal energy and jetting the ink from a nozzle by using the acting force resulting from the change of state. As the ink jet method, a method described in paragraphs 0093 to 0105 of JP2003-306623A can also be applied.

The application of the white ink onto the front surface of the non-permeable substrate by the ink jet method is performed by jetting the white ink from a nozzle of an ink jet head.

As a method of the ink jet head, a shuttle method in which recording is performed while performing scanning with a short serial head in the width direction of the medium to be recorded (that is, a non-permeable substrate), and a line method using a line head in which recording mediums are arranged corresponding to the entire area of one side of the recording medium can be exemplified.

In the line method, image recording can be performed on the entire surface of the recorded medium by scanning the recorded medium in a direction intersecting the direction in which the recording mediums are aligned. In the line method, a transport system such as a carriage that allows the short head to perform scanning in the shuttle method is unnecessary. In addition, in the line method, as compared with the shuttle method, a carriage is not required to move, and a complicated scanning control with the recorded medium is unnecessary, and only the recorded medium moves. Therefore, according to the line method, an increase in the recording speed of an image is achieved as compared with the shuttle method.

It is preferable that the application of the white ink is performed using an ink jet head having a resolution of 300 dpi or more (more preferably 600 dpi or more and still more preferably 800 dpi or more). Here, dpi is an abbreviation for dot per inch, and 1 inch is 2.54 cm.

From the viewpoint of obtaining a high-definition image, the ink droplet amount of the white ink is preferably in a range of 1 picoliter (pL) to 10 pL and more preferably in a range of 1.5 pL to 6 pL.

### (Drying of White Ink)

In the recording step, the white ink applied onto the front surface of the non-permeable substrate is heated and dried to obtain a white image.

The method of heating and drying the white ink is not particularly limited, and examples thereof include infrared (IR) drying, hot air blowing (that is, hot air drying. For example, a dryer or the like), heating and drying with a heating device (for example, a heater, a hot plate, a heating drum, a heating furnace, and the like), and the like.

The method of heating and drying may be a method of combining two or more of the above-described methods.

The heating and drying can be performed by heating the white ink from at least one of the front surface side or the back surface side of the non-permeable substrate.

A heating temperature in the heating and drying of the white ink is preferably 35°C or higher, more preferably 40°C or higher, still more preferably 50°C or higher, and even more preferably 60°C or higher.

The upper limit value of the heating temperature is not particularly limited, but is preferably 100°C and more preferably 90°C.

A heating time in the heating and drying of the white ink is not particularly limited, but is preferably 1 second to 180 seconds, more preferably 1 second to 120 seconds, and still more preferably 1 second to 60 seconds.

In the heating and drying of the white ink, the temperature rising rate of the surface of the white ink from the start point of the heating and drying to 5 seconds later is "Y" in the above-described product (X * Y).

The range of the product (X * Y) and the preferred range of "Y" are as described above.

It is preferable that the white ink is heated and dried by blowing hot air (that is, hot air drying).

In this manner, the rub resistance of the white image is further improved.

### -Product (X * Z)-

In the hot air drying, in a case where a value obtained by dividing the wind speed of the hot air in units of m/s by the temperature of the hot air in units of °C is defined as "Z", a product of "X" (that is, the viscosity (unit: mPa·s) of the concentrated ink at 32°C obtained by concentrating the white ink until the mass thereof is reduced by 30%) and "Z" (hereinafter, also referred to as "product (X * Z)") is preferably 0.5 to 18.0, more preferably 1.0 to 15.0, even more preferably 2.0 to 10.0, and still more preferably 3.5 to 7.5.

In a case where the product (X * Z) is 0.5 or more, the rub resistance of the white image is further improved.

In a case where the product (X * Z) is 18.0 or less, the rub resistance of the white image is further improved.

"Z" is preferably 0.04 to 1.20, more preferably 0.10 to 1.00, and still more preferably 0.15 to 0.80.

### -Ratio [Dry Film Thickness/Wet Film Thickness]-

In the present disclosure, a value obtained by dividing a film thickness of the white ink applied to the front surface of the non-permeable substrate after heating and drying (hereinafter, also referred to as "Dry film thickness" or "A"; unit: µm) by a film thickness of the white ink applied to the front surface of the non-permeable substrate before being heated and dried (hereinafter, also referred to as "Wet film thickness" or "B"; unit: µm) (hereinafter, also referred to as "ratio [Dry film thickness/Wet film thickness]" or "A/B"; unit: µm) is preferably 0.10 to 0.30, more preferably 0.10 to 0.25, and even more preferably 0.10 to 0.20.

In a case where the ratio [Dry film thickness/Wet film thickness] is 0.10 or more, the covering property of the white image is further improved.

In a case where the ratio [Dry film thickness/Wet film thickness] is 0.30 or less, the adhesiveness of the white image is further improved.

The Wet film thickness of the white ink is a film thickness of the white ink applied onto the front surface of the non-permeable substrate, (that is, the white ink film) and is a film thickness before the heating and drying.

The Wet film thickness of the white ink is determined by calculation as a numerical value with two decimal places in units of µm from the droplet amount [pL/pixel] of the ink jetted from the ink jet head and the resolution.

The Dry film thickness of the white ink is a film thickness of the white ink film, and is a film thickness before the heating and drying.

The Dry film thickness of the white ink is, in other words, the film thickness of the white image.

The Dry film thickness is measured by capturing a cross-sectional scanning electron microscope (SEM) image (magnification of 10,000 times) of the image recorded material (that is, the non-permeable substrate with a white image). The Dry film thickness is measured as a numerical value with two decimal places in units of µm.

In a case where the recording method of the present disclosure includes a winding step described later, the Dry film thickness of the white ink is measured by unwinding the image recorded material (that is, the non-permeable substrate with a white image) wound in the winding step and measuring the film thickness of the white image in the unwound image recorded material.

The Dry film thickness of the white ink is preferably in a range of 0.60 µm to 2.50 µm, more preferably in a range of 0.80 µm to 2.00 µm, still more preferably in a range of 1.00 µm to 2.00 µm, and even still more preferably in a range of 1.30 µm to 1.80 µm.

In a case where the Dry film thickness of the white ink is 0.60 µm or more, the covering property of the white image is further improved.

In a case where the Dry film thickness of the white ink is 2.50 µm or less, the adhesiveness of the white image is further improved.

The recording step may further include transporting the non-permeable substrate onto which the white ink has been applied by a transport member in a disposition in which the transport member and the white ink are in contact with each other.

In this case, the non-permeable substrate may be transported by a transport member (for example, a transport roll T1 in Fig. 1 described later) that comes into contact with the white ink (that is, the front surface side of the non-permeable substrate) and a transport member (for example, a transport roll T2 in Fig. 1 described later) that comes into contact with the back surface side of the non-permeable substrate.

In addition, the transportation by the transport member may be performed not only in the recording step but also throughout the recording method of the present disclosure.

The recording step further includes transporting the non-permeable substrate onto which the white ink is applied by a transport member in a disposition in which the transport member and the white ink are in contact with each other, and in a case where the recording method of the present disclosure further includes, after the recording step, a winding step of winding the non-permeable substrate on which the white image is recorded, the average contact surface pressure between the transport member and the white ink (that is, the white ink film) during the period from the application of the white ink to the winding of the non-permeable substrate is preferably 375 N/m² to 4500 N/m², more preferably 500 N/m² to 4500 N/m², and still more preferably 750 N/m² to 4000 N/m².

In a case where the average contact surface pressure is 375 N/m² or more, the transportability of the non-permeable substrate is further improved.

In a case where the average contact surface pressure is 4500 N/m² or less, a decrease in the film thickness of the white image due to the contact with the transport member is suppressed, and as a result, the covering property of the white image is further improved.

Here, in a case where there is only one transport member in contact with the white ink film, the average contact surface pressure between the transport member and the white ink film is equal to the contact surface pressure between the one transport member and the white ink film.

The average contact surface pressure between the transport member and the white ink film refers to an arithmetic average value of contact surface pressures between the transport member and the white ink film in a case where a plurality of transport members are in contact with the white ink film.

In a case where a transport roll is used as the transport member, the contact surface pressure between the transport roll and the white ink film is obtained by dividing the tension (N/m) of the non-permeable substrate transported by the transport roll by the roll radius (m) of the transport roll.

### (Recording of Colored Image)

The recording step may further include recording a colored image by applying a colored ink containing water, a coloring pigment, and a resin onto the front surface of the non-permeable substrate by an ink jet method.

According to this aspect, a multicolor image including a white image and a colored image can be recorded on the front surface of the non-permeable substrate.

In this aspect, only one colored image may be recorded using only one kind of colored ink (for example, one of a cyan image, a magenta image, a yellow image, or a black image), or two or more colored images may be recorded using two or more kinds of colored inks (for example, two or more of a cyan image, a magenta image, a yellow image, or a black image).

The preferred aspect of the application of the colored ink is the same as the preferred aspect of the application of the white ink.

In the recording step, the colored ink applied onto the front surface of the non-permeable substrate may be heated and dried as necessary to obtain a colored image. The preferred aspect of the heating and drying of the colored ink in this case is the same as the preferred aspect of the heating and drying of the white ink.

The colored image may be recorded before the white image or may be recorded after the white image.

Examples of the aspect in which the colored image is recorded before the white image include an aspect in which the colored image (for example, a pattern image such as a character or a figure) is disposed between the front surface of the non-permeable substrate and the white image (for example, a solid image). This aspect is an aspect in which a colored image (for example, a pattern image such as a character or a figure) having a white image (for example, a solid image) as a background is visually recognized through the non-permeable substrate from the back surface side of the non-permeable substrate.

An example of the aspect in which the colored image is recorded after the white image is an aspect in which the colored image (for example, a pattern image such as a character or a figure) is disposed on the white image (for example, a solid image). This aspect is an aspect in which a colored image (for example, a pattern image such as a character or a figure) on the upper layer side is visually recognized with a white image (for example, a solid image) on the lower layer side as a background from the front surface side of the non-permeable substrate.

From the viewpoint of more effectively exhibiting the effect of the recording method of the present disclosure, an aspect in which the colored image is recorded before the white image and is disposed between the front surface of the non-permeable substrate and the white image, is preferable.

### -Colored Ink-

The colored ink used for recording a colored image contains water, a coloring pigment (that is, a chromatic or black pigment), and a resin.

The preferred aspect of the colored ink is the same as the preferred aspect of the white ink described above, except for the type of the pigment.

Any of commercially available organic pigment or inorganic pigment may be used as the coloring pigment.

Examples of the coloring pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

In addition, the coloring pigment may be a water-insoluble pigment which can be dispersed in water by a dispersing agent, or may be a self-dispersing pigment.

The self-dispersing pigment is a pigment which can be dispersed in water without using a dispersing agent.

The self-dispersing pigment is, for example, a compound in which at least one selected from the group consisting of a hydrophilic group such as a carbonyl group, a hydroxyl group, a carboxyl group, a sulfo group, and a phosphoric acid group and salts thereof is chemically bonded to a surface of the pigment directly or through another group.

From the viewpoint of the density of the colored image and the jettability of the colored ink, the content of the coloring pigment in the colored ink is preferably 1% by mass to 20% by mass, more preferably 1% by mass to 15% by mass, and still more preferably 1% by mass to 10% by mass with respect to the total amount of the ink.

### <Pretreatment Liquid Applying Step>

The recording method of the present disclosure may further include, before the recording step, a step of applying (hereinafter, also referred to as a "pretreatment liquid applying step") a pretreatment liquid containing water and an aggregating agent onto the front surface of the non-permeable substrate.

In this case, in the recording step, the white image is recorded by applying the white ink described above onto the region on the front surface onto which the pretreatment liquid has been applied, using an ink jet method.

In the aspect including the pretreatment liquid applying step, the components of the white ink are aggregated by the action of the aggregating agent applied in advance on the front surface, which is advantageous in terms of the image quality of the white image.

In the aspect including the pretreatment liquid applying step, the colored image described above may be recorded in addition to the white image.

In this case, the colored image described above is recorded by applying the colored ink described above onto the region on the front surface onto which the pretreatment liquid has been applied, using an ink jet method. As a result, the components of the colored ink are aggregated by the action of the aggregating agent, which is advantageous in terms of the image quality of the colored image.

As described above, the colored image may be recorded on the upper layer side of the white image (the side away from the non-permeable substrate) or may be recorded on the lower layer side of the white image (the side close to the non-permeable substrate, that is, between the front surface of the non-permeable substrate and the white image), but the image is preferably recorded on the lower layer side of the white image.

### (Pretreatment Liquid)

The pretreatment liquid contains water and an aggregating agent.

### -Water-

The pretreatment liquid contains water.

A content of water is preferably 50% by mass or more and more preferably 60% by mass or more with respect to the total amount of the pretreatment liquid.

The upper limit of the content of water depends on the amount of other components, but is preferably 90% by mass or less and more preferably 80% by mass or less with respect to the total amount of the pretreatment liquid.

### -Aggregating Agent-

The pretreatment liquid contains at least one aggregating agent.

The aggregating agent in the pretreatment liquid aggregates the components in the ink on the front surface of the non-permeable substrate. As a result, image quality of the image can be improved.

It is preferable that the aggregating agent is at least one selected from the group consisting of an organic acid, a polyvalent metal compound, a metal complex, and a cationic polymer.

Preferred examples of the aggregating agent also include aggregating agents described in paragraphs 0122 to 0130 of WO2020/195360A.

Hereinafter, preferred aspects of each of the organic acid, the polyvalent metal compound, the metal complex, and the cationic polymer, which can be used as the aggregating agent, will be described.

### --Organic Acid--

Examples of the organic acid include an organic compound having an acidic group.

Examples of the acidic group include a phosphoric acid group, a phosphonic acid group, a phosphinic acid group, a sulfuric acid group, a sulfonic acid group, a sulfinic acid group, and a carboxy group.

Among these, from the viewpoint of the aggregation rate of the ink, as the acidic group, a phosphoric acid group or a carboxy group is preferable, and a carboxy group is more preferable.

It is preferable that at least a part of the acidic group is dissociated in the pretreatment liquid.

Examples of the organic compound having a carboxy group, include (meth)acrylic acid, poly(meth)acrylic acid, acetic acid, formic acid, benzoic acid, glycolic acid, malonic acid, malic acid (preferably DL-malic acid), maleic acid, succinic acid, glutaric acid, pimelic acid, adipic acid, fumaric acid, citric acid, tartaric acid, phthalic acid, 4-methylphthalic acid, lactic acid, pyrrolidone carboxylic acid, pyrone carboxylic acid, pyrrole carboxylic acid, furan carboxylic acid, pyridine carboxylic acid, coumaric acid, thiophene carboxylic acid, and nicotinic acid.

Among these, from the viewpoint of aggregation rate of the ink, as the organic compound having a carboxy group, di- or higher valent carboxylic acid (hereinafter, also referred to as polyvalent carboxylic acid) is preferable, and dicarboxylic acid is more preferable.

Specifically, as the polyvalent carboxylic acid, malonic acid, malic acid, maleic acid, succinic acid, glutaric acid, pimelic acid, adipic acid, fumaric acid, tartaric acid, 4-methylphthalic acid, or citric acid is preferable; and malonic acid, malic acid, tartaric acid, succinic acid, glutaric acid, pimelic acid, adipic acid, or citric acid is more preferable.

It is preferable that the organic acid has a low pKa (for example, 1.0 to 5.0). As a result, surface charge of particles, for example, the pigment stably dispersed in the ink by a weakly acidic functional group such as a carboxy group, resin particles, and the like can be reduced by bringing the ink into contact with the organic acid having a lower pKa to degrade dispersion stability.

It is preferable that the organic acid has a low pKa, high solubility in water, and a valence of divalent or more. In addition, it is more preferable that the organic acid has a high buffer capacity in a pH region with a pKa lower than a pKa of the functional group (for example, a carboxy group) which stably disperses particles in the ink.

### --Polyvalent Metal Compound--

Examples of the polyvalent metal compound include a polyvalent metal salt.

Examples of the polyvalent metal salt include an organic acid polyvalent metal salt and an inorganic acid polyvalent metal salt.

As the organic acid polyvalent metal salt, a polyvalent metal salt of the above-described organic acid (for example, formic acid, acetic acid, or benzoic acid) is preferable.

As the inorganic acid polyvalent metal salt, a nitric acid polyvalent metal salt, a hydrochloric acid polyvalent metal salt, or a thiocyanic acid polyvalent metal salt is preferable.

Examples of the polyvalent metal salt include salts of alkaline earth metals of Group 2 (such as magnesium and calcium) in the periodic table, salts of transition metals of Group 3 (such as lanthanum) in the periodic table, salts of metals of Group 13 (such as aluminum) in the periodic table, and salts of lanthanides (such as neodymium).

As the polyvalent metal salt, a calcium salt, a magnesium salt, or an aluminum salt is preferable, and a calcium salt or a magnesium salt is more preferable.

As the polyvalent metal compound, an organic acid polyvalent metal salt is preferable, and an organic acid calcium salt or an organic acid magnesium salt is more preferable.

It is preferable that at least a part of the polyvalent metal compound is dissociated into polyvalent metal ions and counter-ions in the pretreatment liquid.

### --Metal Complex--

It is preferable that the metal complex contains at least one selected from the group consisting of zirconium, aluminum, and titanium as a metal element.

As the metal complex, a metal complex containing, as a ligand, at least one selected from the group consisting of acetate, acetylacetonate, methylacetoacetate, ethylacetoacetate, octylene glycolate, butoxyacetylacetonate, lactate, a lactate ammonium salt, and triethanol aminate is preferable.

The metal complex may be a commercially available product. Various organic ligands, particularly various multidentate ligands which are capable of forming metal chelate catalysts are commercially available. Therefore, the metal complex may be a metal complex prepared by combining a commercially available organic ligand with a metal.

### --Cationic Polymer--

It is preferable that the cationic polymer is a homopolymer of a cationic monomer having a primary to tertiary amino group or a quaternary ammonium base, or a copolymer or a condensed polymer of a cationic monomer and a non-cationic monomer. The cationic polymer may be used in any form of a water-soluble polymer or a water-insoluble polymer (that is, latex particles).

Examples of the cationic polymer include polyvinylpyridine salt, polyalkylaminoethyl acrylate, polyalkylaminoethyl methacrylate, polyvinylimidazole, polyethyleneimine, polybiguanide, polyguanide, polyallylamine, and derivatives thereof.

From the viewpoint of viscosity of the pretreatment liquid, it is preferable that a weight-average molecular weight of the cationic polymer is small. In a case where the pretreatment liquid is applied onto a non-permeable substrate by an ink jet recording method, the weight-average molecular weight of the cationic polymer is preferably 1,000 to 500,000, more preferably 1,500 to 200,000, and still more preferably 2,000 to 100,000. It is advantageous that the weight-average molecular weight thereof is 1,000 or more from the viewpoint of aggregation rate. It is advantageous that the weight-average molecular weight thereof is 500,000 or less from the viewpoint of jetting reliability. However, in a case where the pretreatment liquid is applied to the non-permeable substrate by a method other than the ink jet recording method, the present invention is not limited thereto.

A content of the aggregating agent in the pretreatment liquid is preferably 0.1% by mass to 40% by mass, more preferably 0.1% by mass to 30% by mass, still more preferably 1% by mass to 20% by mass, and even more preferably 1% by mass to 10% by mass with respect to the total amount of the pretreatment liquid.

### -Resin-

The pretreatment liquid may contain at least one resin.

The resin in the pretreatment liquid contributes to the film forming property of the pretreatment liquid (that is, the formability of film by the pretreatment liquid).

As the resin in the pretreatment liquid, the same resin as the resin in the ink (for example, the resin particles) can be used.

A content of the resin in the pretreatment liquid is not particularly limited.

The content of the resin is preferably 0.5% by mass to 30% by mass, more preferably 1% by mass to 20% by mass, and particularly preferably 1% by mass to 15% by mass with respect to the total amount of the pretreatment liquid.

### -Water-soluble organic solvent-

The pretreatment liquid may contain at least one water-soluble organic solvent.

As the water-soluble organic solvent in the pretreatment liquid, the same water-soluble organic solvent as the water-soluble organic solvent which can be contained in the ink can be used.

### -Additive-

The ink may contain an additive such as a surfactant, a water-soluble resin, a co-sensitizer, an ultraviolet absorbing agent, an antioxidant, a fading inhibitor, a conductive salt, and a basic compound, as necessary.

### -Physical Properties-

A pH of the pretreatment liquid is preferably 2.0 to 7.0 and more preferably 2.0 to 4.0. The pH of the pretreatment liquid is measured by the same method as in the pH of the ink.

From the viewpoint of coating properties of the pretreatment liquid, a viscosity of the pretreatment liquid is preferably 0.5 mPa·s to 10 mPa·s and more preferably 1 mPa·s to 5 mPa·s. The viscosity is a value measured at 25°C using a viscometer. The viscosity of the pretreatment liquid is measured by the same method as in the viscosity of the ink.

A surface tension of the pretreatment liquid is preferably 60 mN/m or less, more preferably 20 mN/m to 50 mN/m, and still more preferably 30 mN/m to 45 mN/m. The surface tension is a value measured at a temperature of 25°C. The surface tension of the pretreatment liquid is measured by the same method as in the surface tension of the ink.

### (Method of Applying Pretreatment Liquid)

A method of applying the pretreatment liquid is not particularly limited, and examples thereof include known methods such as a coating method, a dipping method, and an ink jet recording method.

Examples of the coating method include known coating methods using a bar coater, an extrusion die coater, an air doctor coater, a blade coater, a rod coater, a knife coater, a squeeze coater, and a reverse roll coater.

### (Drying of Pretreatment Liquid)

The pretreatment liquid applying step may include drying the pretreatment liquid applied onto the front surface of the non-permeable substrate.

A method of drying the pretreatment liquid is not particularly limited, but for example, the same method as the method exemplified in the method of drying the white ink can be applied.

A preferred range of drying conditions (for example, the heating temperature and the heating time) of the pretreatment liquid is the same as a preferred range of the drying conditions of the white ink.

### <Winding Step>

The recording method of the present disclosure may include a winding step of winding the non-permeable substrate on which the white image is recorded.

The winding step is not particularly limited, and can be performed using a known winding device including a winding core.

The recording method of the present disclosure may include other steps in addition to the above-described steps.

### <Image Recording Apparatus>

The image recording apparatus used in the image recording method of the present disclosure is an image recording apparatus including
an ink jet head configured to apply the white ink onto the one surface of the non-permeable substrate, and
a heating and drying device configured to perform heating and drying on the applied white ink,
in which the product of the X and the Y is 30 to 280.

With the image recording apparatus, the same effects as those of the image recording method of the present disclosure are exhibited.

### <Example of Image Recording Apparatus>

Fig. 1 is a diagram conceptually showing an example of an image recording apparatus used in an image recording method of the present disclosure.

As shown in Fig. 1, the image recording apparatus according to the present example is an example of an image recording apparatus comprising a transport mechanism that transports a non-permeable substrate in a roll-to-roll method, unwinds a non-permeable substrate A1 having a long film shape wound in a roll shape by an unwinding device R1, transports the unwound non-permeable substrate A1 in a direction of a block arrow in a state where a tension is applied, causes the non-permeable substrate A1 to pass through a pretreatment liquid applying device P1, a pretreatment liquid drying zone DP1, a first ink jet head IJ1, a first drying zone D1, a second ink jet head IJ2, and a drying zone D2 in this order, transports the non-permeable substrate A1 by transport rolls T1 and T2 as transport members, and finally winds the non-permeable substrate A1 by a winding device R2.

The non-permeable substrate A1 may be transported in a state where tension is applied. In addition, the tension may vary depending on the position in the transport direction, or may be uniform.

The image recording apparatus according to the present example may comprise a tension adjusting unit for adjusting the tension of the non-permeable substrate.

Examples of the tension adjusting unit include
a powder brake provided in the unwinding device R1 and/or the winding device R2,
a dancer roll provided in the middle of the transport path, and
a control device that controls each tension by adjusting each condition of the image recording apparatus (for example, a tension controller).

Since Fig. 1 is a conceptual diagram, the transport path of the non-permeable substrate A1 is simplified, and the non-permeable substrate A1 is shown as being transported in one direction between the unwinding device R1 to the transport roll T1, but it goes without saying that the transport path of the non-permeable substrate A1 during this period may be meandering.

The method of transporting the non-permeable substrate A1 can be appropriately selected from various web transport methods of using a drum, a roll, and the like.

In the unwinding device R1 for unwinding the non-permeable substrate A1, a pretreatment liquid applying device P1, a pretreatment liquid drying zone DP1, a first ink jet head IJ1, a first drying zone D1, a second ink jet head IJ2, a drying zone D2, a transport roll T1, and a transport roll T2 are disposed in this order from the upstream side in the transport direction, on the downstream side of the non-permeable substrate A1 in the transport direction with respect to the unwinding device R1 for unwinding the non-permeable substrate A1.

The pretreatment liquid, the first ink, and the second ink are respectively applied by the pretreatment liquid applying device P1, the first ink jet head IJ1, and the second ink jet head IJ2.

In this case, at least one of the heating and drying of the pretreatment liquid in the pretreatment liquid drying zone DP1, the heating and drying of the first ink in the first drying zone D1, or the heating and drying of the second ink in the second drying zone D2 can be performed.

In the first drying zone D1, the heating and drying of the pretreatment liquid may be substantially performed in addition to the heating and drying of the first ink.

In the second drying zone D2, the heating and drying of the pretreatment liquid and/or the heating and drying of the first ink may be substantially performed in addition to the heating and drying of the second ink. In this case, at least one of the pretreatment liquid drying zone DP1 or the first drying zone D1 may be omitted.

In addition, in a case where the non-permeable substrate passes through each drying zone in a state where the temperature of each drying zone is set to room temperature, heating and drying in each drying zone can also be omitted.

In the present example, the first ink is any one of a colored ink for recording a colored image or a white ink for recording a white image, and the second ink is the other of the colored ink and the white ink.

The colored ink contains water, a coloring pigment, and a resin.

The white ink contains water, a white pigment, and a resin.

The white ink used in the image recording method of the present disclosure may be used as the first ink in the present example or may be used as the second ink in the present example.

A surface treatment unit (not shown) for performing a surface treatment (preferably, a corona treatment) on at least one of the front surface (that is, the image recording surface) or the back surface (that is, the image non-recording surface) of the non-permeable substrate A1 may be provided on the upstream side of the pretreatment liquid applying device P1.

Further, a cooling zone for cooling the recorded multicolor image (that is, the multicolor image including the white image and the colored image) may be provided downstream of the second drying zone D2.

The first ink jet head IJ1 and the second ink jet head IJ2 may be shuttle heads, but from the viewpoint of increasing the speed of image recording, a line head in which a plurality of jetting ports (nozzles) are arranged on the non-permeable substrate A1 having a long film shape in the width direction is preferable.

Each of the first ink jet head IJ1 and the second ink jet head IJ2 may be used alone or a plurality of kinds thereof.

Examples of a combination of the first ink jet head IJ1 and the second ink jet head IJ2 include a combination in which the first ink jet head IJ1 is formed of four ink jet heads corresponding to four colors of cyan, magenta, yellow, and black (note; these four ink jet heads are arranged in the transport direction of the non-permeable substrate) and the second ink jet head IJ2 is formed of one ink jet head corresponding to white (that is, white).

Further, other examples of the combination of the first ink jet head IJ1 and the second ink jet head IJ2 include a combination in which the first ink jet head IJ1 is formed of one ink jet head corresponding to white (that is, white) and the second ink jet head IJ2 is formed of four ink jet heads corresponding to four colors of cyan, magenta, yellow, and black (note; these four ink jet heads are arranged in the transport direction of the non-permeable substrate).

In the ink jet recording using the image recording apparatus according to the present example,
first, the non-permeable substrate A1 having a long film shape wound in a roll shape is unwound by the unwinding device R1,
the unwound non-permeable substrate A1 is transported in a direction of a block arrow in a state where a tension is applied,
the pretreatment liquid is applied onto the transported non-permeable substrate A1 by the pretreatment liquid applying device P1,
next, the pretreatment liquid is dried in the pretreatment liquid drying zone DP1 as necessary,
next, the first ink (that is, any one of the colored ink or the white ink) is applied by the first ink jet head IJ1,
next, the first ink is dried in the first drying zone D1 as necessary,
next, the second ink (that is, the other of the colored ink or the white ink) is applied by the second ink jet head IJ2, and
next, the second ink is dried in the second drying zone D2 as necessary.

As a result, a multicolor image including the first image (that is, any one of the colored image or the white image) derived from the first ink and the second image (that is, the other of the colored image or the white image) derived from the second ink is obtained.

Next, as necessary, the obtained multicolor image is cooled, and the non-permeable substrate A1 on which the multicolor image is recorded is transported to the winding device R2 by the transport rolls T1 and T2 as transport members, and finally, the non-permeable substrate A1 is wound by the winding device R2.

Among the transport roll T1 and the transport roll T2, the transport roll T1 transports the non-permeable substrate A1 in a disposition in contact with the front surface side of the non-permeable substrate A1, and the transport roll T2 transports the non-permeable substrate A1 in a disposition in contact with the back surface side of the non-permeable substrate A1.

The transport roll T1 is an example of a transport member disposed to be in contact with the white ink, which is provided between the application of the white ink and the winding of the non-permeable substrate A1. In the image recording apparatus according to the present example, a transport member disposed to be in contact with the white ink may be present in addition to the transport roll T1.

The preferred range of the average contact surface pressure between the transport member and the white ink during the period from the application of the white ink to the winding of the non-permeable substrate is as described above.

In the present example, the application and drying of the pretreatment liquid may be omitted.

In addition, in the present example, the colored image may not be recorded, and only the white image may be recorded.

### Examples

Hereinafter, examples of the present disclosure will be shown, but the present disclosure is not limited to the following examples.

### <Preparation of Pretreatment Liquid>

The components described below were mixed to prepare a pretreatment liquid.

### -Composition of Pretreatment Liquid-

· Glutaric acid [aggregating agent]
   ... 6.1% by mass
· Propylene glycol (PG) [water-soluble organic solvent]
   ... 20% by mass
· OLFINE E1010 (manufactured by Nissin Chemical Industry Co., Ltd.) [surfactant]
   ... 0.5% by mass
· SUPERFLEX 500M (manufactured by DKS Co., Ltd.) [aqueous dispersion of urethane resin particles]
   ... 7.0% by mass
· Triisopropanolamine [pH adjuster]
   ... 0.2% by mass
· BYK024 (manufactured by BYK-Chemie GmbH) [antifoaming agent]
   ... 0.01% by mass
· Ultrapure water
   ... remaining amount set such that total amount of pretreatment liquid reached 100% by mass

### <Preparation of white ink>

### (Preparation of white ink W1)

The following components were mixed to prepare a white ink W1.

### -Composition of White Ink W1-

· White pigment dispersion liquid 1 shown below
   ... 17% by mass in terms of content of the white pigment
· Propylene glycol (PG) [water-soluble organic solvent]
   ... 28% by mass
· Propylene glycol monomethyl ether (PGmME) [water-soluble organic solvent]
   ... 5% by mass
· OLFINE E1010 (manufactured by Nissin Chemical Co., Ltd.) [acetylene glycol-based surfactant]
   ... 0.60% by mass
· BYK-3450 (manufactured by BYK Chemie GmbH) [silicone-based surfactant]
   ... 0.75% by mass
· BYK024 (manufactured by BYK-Chemie GmbH) [antifoaming agent]
   ... 0.02% by mass
· SOLSPERSE 43000 (manufactured by Lubrizol Japan Ltd.) [polymer dispersing agent]
   ... 0.75% by mass
· JONCRYL JDX-6180 (manufactured by BASF SE) [water-soluble polymer]
   ... 1.1% by mass
· PVP-K15 (polyvinylpyrrolidone K15)
   ... 0.12% by mass
· SNOWTEX XS (manufactured by Nissan Chemical Corporation) [colloidal silica dispersion liquid]
   ... 0.1% by mass in terms of content of colloidal silica particles
· Water
   ... remaining amount of white ink such that total amount of white ink is 100% by mass

### (Preparation of White Pigment Dispersion Liquid 1 (Containing Block Polymer Dispersing Agent))

### -Synthesis of Block Polymer Dispersing Agent 1-

A block polymer dispersing agent 1 was synthesized as a pigment dispersing agent for the white pigment dispersion liquid 1 with reference to Synthesis Example 8 of JP2015-083688A. The details are described below.
Diethylene glycol dimethyl ether (266 parts by mass; polymerization solvent),
2-iodo-2-cyanopropane (6.2 parts by mass; polymerization initiation compound),
methyl methacrylate (MMA) (120 parts by mass; monomer),
acrylic acid (AA) (28.8 parts by mass; monomer),
cyclohexyl methacrylate (CHMA) (67.2 parts by mass; monomer),
azobismethyl isovaleronitrile (7.9 parts by mass), and
2-t-butyl-4,6-dimethylphenol (0.7 parts by mass; catalyst)
were added to a reactor of a 1 L separable flask equipped with a stirrer, a backflow condenser, a thermometer, and a nitrogen introduction pipe, and the mixture was stirred while flowing nitrogen.

Next, the temperature (reaction temperature) of the mixture in the reactor was increased to 70°C, and the mixture was polymerized for 3 hours, thereby obtaining a polymerization solution A containing an MMA/AA/CHMA copolymer.

After 3 hours, as a result of sampling a part of the polymerization solution A and measuring the solid content, the solid content was 42.0% by mass, and thus it was confirmed that most of the monomers were polymerized.

Further, in a case where the molecular weight of the MMA/AA/CHMA copolymer was measured by GPC, the weight-average molecular weight (Mn) was 7,500.

The acid value of this MMA/AA/CHMA copolymer was 101.0 mgKOH/g.

Next, a mixture of benzyl methacrylate (BzMA) (35.2 parts by mass; monomer) and V-65 (0.3 parts by mass; radical generating agent) was added to the polymerization solution A, and the mixture was polymerized at 70°C for 3 hours to obtain a polymerization solution B containing the block polymer dispersing agent 1.

Here, the block polymer dispersing agent 1 is a block polymer containing an A block which is an MMA/AA/CHMA copolymer and a B block which is a BzMA homopolymer.

As a result of measurement of the solid content in the obtained polymerization solution B, the solid content thereof was 43.2% by mass and it was confirmed that most of the monomers were polymerized.

In addition, the Mw of the block polymer dispersing agent 1 was 8,500, and the acid value thereof was 89.3 mgKOH/g.

### -Preparation of White Pigment Dispersion Liquid 1-

The above-described block polymer dispersing agent 1 (136.4 parts by mass), butyl carbitol (163.6 parts by mass), and C. I. Pigment White 6 (trade name "JR-405", manufactured by Tayca Corporation, rutile type titanium dioxide particles) (450 parts by mass) as a white pigment were blended and stirred with a disperser. Next, the white pigment was sufficiently dispersed using a horizontal media disperser, thereby obtaining an oil-based pigment dispersion liquid. The average particle diameter of the white pigment dispersed in the oil-based pigment dispersion liquid was 290 nm. The viscosity of the oil-based pigment dispersion liquid was 86.3 m3Pa·s.

Next, a mixed solution consisting of potassium hydroxide (4.0 parts by mass) and water (341 parts by mass) was gradually added to the oil-based pigment dispersion liquid (700 parts by mass) while being stirred using a disperser, and the solution was neutralized. Thereafter, the white pigment was sufficiently dispersed using a horizontal media disperser, thereby obtaining a pigment dispersion liquid.

Next, ultrafiltration was performed by allowing ion exchange water to flow through the obtained pigment dispersion liquid at a flow rate of 600 mL per minute using an ultrafiltration device (cross-flow type ultrafilter (UF), manufactured by Sartorius AG). The liquid temperature was maintained at 25°C, and the ultrafiltration was performed ten times by setting one time the volume of the charged liquid to once. Ion exchange water was added to obtain a white pigment dispersion liquid 1 in which the concentration of the white pigment was 45% by mass and the concentration of the block polymer dispersing agent 1 was 3.7% by mass.

### (Preparation of White Ink W2)

A white ink W2 was prepared in the same manner as in the preparation of the white ink W1, except that in the preparation of the white ink, NEOCRYL A1091 (manufactured by Covestro Coating Resins) [aqueous dispersion liquid of styrene-acrylic resin particles] (content of styrene-acrylic resin particles: 0.75% by mass) was added.

### (Preparation of White Ink W3)

A white ink W3 was prepared in the same manner as in the preparation of the white ink W1, except that in the preparation of the white ink, NEOCRYL A1091 (manufactured by Covestro Coating Resins) [aqueous dispersion liquid of styrene-acrylic resin particles] (content of styrene-acrylic resin particles: 1.85% by mass) was added and JONCRYL JDX-6180 (manufactured by BASF SE) was not used.

### (Preparation of White Ink W4)

A white ink W4 was prepared in the same manner as in the preparation of the white ink W2, except that the following white pigment dispersion liquid 2 (containing a random polymer dispersing agent) was used instead of the white pigment dispersion liquid 1 (containing a block polymer dispersing agent).

### (Preparation of White Pigment Dispersion Liquid 2 (containing Random Polymer Dispersing Agent))

### -Synthesis of Random Polymer Dispersing agent 1-

965 g of dipropylene glycol was added to a 5000 mL three-neck flask provided with a stirrer and a cooling pipe and heated to 85°C in a nitrogen atmosphere.

A solution I obtained by dissolving 640 g of benzyl methacrylate, 340 g of methacrylic acid, and 19.94 g of 2-mercaptopropionic acid in 370.28 g of dipropylene glycol, and
a solution II obtained by dissolving 17.69 g of t-butyl peroxy-2-ethylhexanoate (product name, "PERBUTYL O", manufactured by NOF Corporation) in 221.17 g of dipropylene glycol
were respectively prepared.

The solution I was added dropwise to the three-neck flask for 4 hours, and the solution II was added dropwise thereto for 5 hours. After completion of the dropwise addition, the solution was allowed to further react for 2 hours. The disappearance of the monomers was confirmed by ¹H-NMR.

The obtained reaction solution was heated to 70°C, 248.02 g of a 50 mass% potassium hydroxide aqueous solution was added thereto, 107.48 g of dipropylene glycol and 75.52 g of pure water were added thereto, and the solution was stirred, thereby obtaining a 37 mass% solution of a random polymer dispersing agent.

The structural unit constituting the obtained random polymer dispersing agent 1 was confirmed by ¹H-NMR. In addition, the weight-average molecular weight (Mw) was acquired by GPC. The weight-average molecular weight (Mw) of the obtained random polymer dispersing agent 1 was 8,400, and the acid value thereof was 221.7 mgKOH/g.

### -Preparation of White Pigment Dispersion Liquid 2 (containing Random Polymer Dispersing Agent)-

A random polymer dispersing agent 1 (150 parts by mass) was dissolved in water to prepare a polymer solution in which the concentration of the random polymer dispersing agent 1 was 25% by mass.

The polymer solution (96 parts by mass), 300 parts by mass of C. I. Pigment White 6 (trade name "JR-405", rutile type titanium dioxide particles, manufactured by Tayca Corporation) as a white pigment, and 270 parts by mass of water were mixed with each other to obtain a mixed solution. A potassium hydroxide aqueous solution was added to the obtained mixed solution, and the pH after neutralization was adjusted to 8.7.

Next, the mixed solution after neutralization was subjected to a dispersion treatment for 3 hours using a beads mill (bead diameter: 0.1 mmφ, zirconia beads). In this manner, a white pigment dispersion liquid (uncrosslinked dispersion liquid) PD1 in which the white pigment was dispersed by the pigment dispersing agent P1 was obtained.

Next, ultrafiltration was performed by allowing ion exchange water to flow through the obtained white pigment dispersion liquid (uncrosslinked dispersion liquid) PD1 at a flow rate of 600 mL per minute using an ultrafiltration device (cross-flow type ultrafilter (UF), manufactured by Sartorius AG). The liquid temperature was maintained at 25°C, and the ultrafiltration was performed three times by setting one time the volume of the charged liquid to once. Ion exchange water was added to the liquid after the ultrafiltration to obtain a white pigment dispersion liquid 2 in which the concentration of the white pigment was 45% by mass and the concentration of the random polymer dispersing agent 1 was 3.6% by mass.

### <Measurement of Viscosity of White Ink and Concentrated Ink>

The viscosity of each of the white inks W1 to W4 and the viscosity (X) of the concentrated ink were measured. From the viscosity and the viscosity of the concentrated ink, a concentration thickening rate (%) was determined.

The results thereof are shown in Table 1.

These viscosities were measured under a condition of 32°C using a TV-22 type viscometer manufactured by TOKI-SANGYO Co., Ltd.

In addition, the concentrated ink was prepared by heating the white ink and distilling off the solvent (that is, water and a water-soluble organic solvent) until the mass was reduced by 30%.

**[Table 1]**

| White ink | W1 | W2 | W3 | W4 |
|---|---|---|---|---|
| Viscosity [mPa·s] | 4.5 | 5.2 | 5.2 | 6.3 |
| Viscosity (X) of concentrated ink [mPa·s] | 11.6 | 15.4 | 16.5 | 19.5 |
| Concentration thickening rate | 156% | 195% | 216% | 210% |

### <Preparation of Colored Ink>

A cyan ink, a black ink, a magenta ink, and a yellow ink were prepared as colored inks.

Each ink was prepared by mixing components in the composition of each ink shown below.

### -Composition of Cyan Ink-

· APD4000 Cyan (manufactured by Fujifilm Imaging Colorants Ltd.) [cyan pigment dispersion liquid]
   ... 4.0% by mass in terms of content of cyan pigment
· Propylene glycol monomethyl ether (PGmME) [water-soluble organic solvent]
   ... 3% by mass
· Propylene glycol (PG) [water-soluble organic solvent]
   ... 20% by mass
· NeoCryl A-1105 (manufactured by DSM) [acrylic resin particle dispersion liquid]:
   ... 5.0% by mass in terms of content of resin particles
· OLFINE E1010 (manufactured by Nissin Chemical Co., Ltd.) [acetylene glycol-based surfactant]
   ... 1.0% by mass
· BYK3450 (manufactured by BYK-Chemie GmbH) [silicone-based surfactant]
   ... 1.0% by mass
· PVPK15 (polyvinylpyrrolidone K15)
   ... 0.15% by mass
· ST-XS (manufactured by Nissan Chemical Corporation) [colloidal silica dispersion liquid]
   ... 0.05% by mass in terms of content of colloidal silica particles
· Water
   ... remaining amount such that total amount of ink reached 100% by mass

### -Composition of Black Ink-

· APD4000 Black (manufactured by Fujifilm Imaging Colorants Ltd.):
   ... 4.0% by mass in terms of content of pigment
· Propylene glycol (PG) [water-soluble organic solvent]
   ... 20% by mass
· Propylene glycol monomethyl ether (water-soluble organic solvent)
   ... 1.0% by mass
· NeoCryl A-1105 (acrylic resin particle dispersion liquid) (manufactured by DSM)
   ... 5.0% by mass in terms of content of resin particles
· OLFINE E1010 (acetylene glycol-based surfactant, manufactured by Nissin Chemical Co., Ltd.)
   ... 1.0% by mass
· BYK3450 (silicone-based surfactant, manufactured by BYK-Chemie GmbH)
   ... 1.0% by mass
· PVPK15 (polyvinylpyrrolidone K15)
   ... 0.15% by mass
· ST-XS (colloidal silica dispersion liquid) (manufactured by Nissan Chemical Corporation)
   ... 0.05% by mass in terms of content of colloidal silica particles
· Water
   ... remaining amount such that total amount of ink reached 100% by mass

### -Composition of Magenta Ink-

- APD4000 Magenta (manufactured by Fujifilm Imaging Colorants Ltd.)
   ... 5.0% by mass in terms of content of pigment
- Propylene glycol (PG) [water-soluble organic solvent]
   ... 20% by mass
- Propylene glycol monomethyl ether (water-soluble organic solvent)
   ... 1.0% by mass
- NeoCryl A-1105 (acrylic resin particle dispersion liquid) (manufactured by DSM)
   ... 5.0% by mass in terms of content of resin particles
- OLFINE E1010 (acetylene glycol-based surfactant, manufactured by Nissin Chemical Co., Ltd.)
   ... 1.0% by mass
- BYK3450 (silicone-based surfactant, manufactured by BYK-Chemie GmbH)
   ... 1.0% by mass
- PVPK15 (polyvinylpyrrolidone K15)
   ... 0.15% by mass
- ST-XS (colloidal silica dispersion liquid) (manufactured by Nissan Chemical Corporation)
   ... 0.05% by mass in terms of content of colloidal silica particles
- Water
   ... remaining amount such that total amount of ink reached 100% by mass

### -Preparation of Yellow Ink-

- APD4000 Yellow (manufactured by Fujifilm Imaging Colorants Ltd.)
   ... 4.0% by mass in terms of content of pigment
- Propylene glycol (PG) [water-soluble organic solvent]
   ... 20% by mass
- Propylene glycol monomethyl ether (water-soluble organic solvent)
   ... 1.0% by mass
- NeoCryl A-1105 (acrylic resin particle dispersion liquid) (manufactured by DSM)
   ... 5.0% by mass in terms of content of resin particles
- OLFINE E1010 (acetylene glycol-based surfactant, manufactured by Nissin Chemical Co., Ltd.)
   ... 1.0% by mass
- BYK3450 (silicone-based surfactant, manufactured by BYK-Chemie GmbH)
   ... 1.0% by mass
- PVPK15 (polyvinylpyrrolidone K15)
   ... 0.15% by mass
- ST-XS (colloidal silica dispersion liquid) (manufactured by Nissan Chemical Corporation)
   ... 0.05% by mass in terms of content of colloidal silica particles
- Water
   ... remaining amount such that total amount of ink reached 100% by mass

### <Preparation of Image Recording Apparatus>

As the image recording apparatus, the image recording apparatus shown in Fig. 1 described above was prepared.

A gravure coater was used as the pretreatment liquid apply ing device P1.

The drying method in the pretreatment liquid drying zone DP1 was hot air drying.

As the first ink jet head IJ1, four ink jet heads for, cyan, magenta, yellow and black were arranged in this order from the upstream side (that is, the upstream side of the non-permeable substrate in the transport direction).

An ink jet head for white was disposed as the second ink jet head IJ2.

Any of the ink jet heads and the conditions for jetting the ink were as follows.
· Ink jet head: 1200 dpi (dot per inch, 1 inch is 2.54 cm)/20-inch width piezo full line head (total number of nozzles: 2048) was used.
· Ink droplet amount: set to 3.0 pL
· Driving frequency: set to 30 kHz

The drying method in the first drying zone D1 and the drying method in the second drying zone D2 were both hot air drying. However, the drying method in the second drying zone D2 was switched to infrared (IR) drying or heating drum drying.

As the transport roll T1 and the transport roll T2, an aluminum roll (roll radius: 0.05 m) subjected to an alumite treatment was used.

### <Preparation of Non-Permeable Substrate>

As a non-permeable substrate, a polyethylene terephthalate (PET) substrate "TAIKO polyester film (thickness: 25 µm)" manufactured by Futamura Chemical Co., Ltd. was prepared.

This "TAIKO polyester film (thickness: 25 µm)" is a roll body in which a long PET substrate having a thickness of 25 µm and a width of 800 mm is wound in a roll shape.

### [Test numbers 1 to 44]

### <Image Recording>

The following ink jet recording was performed using the image recording apparatus, the pretreatment liquid, and the white ink as the second ink described above, thereby obtaining an image recorded material which is a non-permeable substrate with a white image.

In this image recording, a colored ink (that is, a cyan ink, a black ink, a magenta ink, and a yellow ink) as the first ink was not used.

As the second ink, any one of the above-described white inks W1 to W4 was used (see Tables 2 and 3).

First, the non-permeable substrate was unwound from the roll body by the unwinding device W1,
the unwound non-permeable substrate was transported in a state where a tension was applied, the pretreatment liquid was applied onto the front surface of the transported non-permeable substrate by a gravure coater as the pretreatment liquid applying device P1
the pretreatment liquid was dried in the pretreatment liquid drying zone DP1,
the white ink as the second ink was applied by the second ink jet head IJ2, and
the white ink as the second ink was dried in the second drying zone D2.

By the above operation, a white image was recorded on the front surface of the non-permeable substrate being transported, and an image recorded material which was the non-permeable substrate with the white image was obtained.

Next, the obtained image recorded material was transported by the transport roll T1 and the transport roll T2 and was wound by the winding device W2.

In the ink jet recording, the transportation speed of the non-permeable substrate was set to 50 m/min.

The application amount of the pretreatment liquid was 3.0 g/m².

The drying conditions for the pretreatment liquid were set to a hot air temperature of 80°C, a hot air wind speed of 20 m/sec, and a drying time of 3 seconds.

The application amount of the second ink (white ink) was set to 3.0 g/m².

The drying method and drying conditions (that is, the temperature rising rate, the temperature of hot air, and the air pressure of hot air) for the second ink (white ink) were as shown in Tables 2 and 3. The drying time was fixed to 40 seconds.

The temperature rising rate is a rate of increase in the surface temperature from a start point in time of heating and drying to a point in time 5 seconds later. The temperature rising rate was measured by measuring the surface temperature of the white ink applied onto the front surface of the non-permeable substrate.

### <Measurement of Dry film thickness and Wet film thickness>

The film thickness of the white ink on the front surface of the non-permeable substrate before drying in the second drying zone D2 after the application of the white ink by the second ink jet head IJ2 (Wet film thickness (µm); B) was determined by calculation as a numerical value with two decimal places in units of µm from the droplet amount [pL/pixel] of the ink jetted from the ink jet head and the resolution.

In addition, the film thickness of the white ink on the front surface of the non-permeable substrate (Dry film thickness (µm); A) was measured as a numerical value with two decimal places in units of µm by unwinding the image recorded material from the image recorded material after winding, capturing a cross-sectional SEM image (magnification: 10,000 times) of the unwound image recorded material, and measuring the film thickness.

A value (A/B) obtained by dividing the Dry film thickness (A) by the Wet film thickness (B) was determined.

These results are shown in Table 2 and Table 3.

### <Contact Surface Pressure with Transport Roll T1>

The tension (N/m) of the non-permeable substrate at the location of the transport roll T1 was divided by the radius of the transport roll T1 (that is, 0.05 m) to obtain the contact surface pressure (N/m²) between the white image and the transport roll T1.

The results are shown in Table 2 and Table 3.

### <Evaluation>

The following evaluations were performed on the white image obtained by the image recording.

The results are shown in Table 2 and Table 3.

In the notes column of Tables 2 and 3, "Ex." and "Com." respectively mean Examples and Comparative Examples (the same applies to Table 4 and subsequent tables).

### (Covering Property)

The image recorded material was placed on a black portion of a contrast ratio test paper (JIS approved product) manufactured by TP Giken Co., Ltd. in a direction in which the white image in the image recorded material was in contact with the black portion, and the covering power (%) of the white image was measured. The covering power was measured using x-rite eXact Advanced manufactured by X-Rite Inc. (see https://www.xrite.co.jp/allproduct/q-a/99-exact/588-pqa0111.html).

In the following evaluation standards, the rank of the most excellent covering property is A.

### -Evaluation Standards for Covering Property-

A: The covering power was 56.0% or more.
B: The covering power was 54.5% or more and less than 56.0%.
C: The covering power was 53.0% or more and less than 54.5%.
D: The covering power was less than 53.0%.

### (Adhesiveness)

A cross hatch test was performed on the white image of the above-described image recorded material in conformity with ISO2409 (crosscut method), and the adhesiveness of the image was evaluated based on the following evaluation standards.

In the following evaluation standards, the rank of the most excellent adhesiveness of the image is "A".

In the cross hatch test, a cut interval was set to 1 mm, and 25 square lattices having a size of 1 mm square were formed.

In the following evaluation standards, the percentage (%) of lattice peeling is a value acquired by the following equation. The total number of lattices in the following equation is 25. Percentage (%) of lattice peeling = [(Number of lattices which were peeled off)/(Total number of lattices)] × 100

In the following evaluation standard, the rank of the most excellent adhesiveness is A.

### -Evaluation Standards for Adhesiveness-

A: The percentage (%) of lattice peeling was 0% or more and 5% or less.
B: The percentage (%) of lattice peeling was more than 5% and 15% or less.
C: The percentage (%) of lattice peeling was more than 15% and 35% or less.
D: The percentage (%) of lattice peeling was more than 35%.

### (In-Plane Unevenness)

The covering power (%) of the white image was measured at 10 points in the width direction of the image recorded material by the above-described method for measuring the covering power. The maximum value and the minimum value of the covering power at the obtained 10 points were determined, and a value obtained by subtracting the minimum value from the maximum value was defined as Δ. The in-plane unevenness of the white image was evaluated according to the following evaluation standard based on the value of Δ.

In the following evaluation standard, the rank of the most excellent suppression of the in-plane unevenness is A.

### -Evaluation Standard for In-Plane Unevenness-

A: Δ was less than 1.0
B: Δ was 1.0 or more and less than 2.0
C: Δ was 2.0 or more and less than 3.0
D: Δ was 3.0 or more

### (Rub Resistance)

The white image in the image recorded material was repeatedly rubbed with a paperweight wrapped with a rubbing paper. As the rubbing paper, OK Top Coat 104 (manufactured by Oji Paper Co., Ltd.) was used. Further, the rubbing operation described above was performed in a state where a load of 4.0 N was applied.

The color transfer from the white image to the rubbing paper was visually observed, and the rub resistance of the image was evaluated based on the following evaluation standards.

In the following evaluation standard, "AA" is the rank that indicates the best rub resistance of the image.

### -Evaluation Standard for Rub Resistance-

A: Color transfer from the white image to the rubbing paper was not visually recognized at the time of completion of the rubbing operation performed 200 times.
B: Color transfer from the white image to the rubbing paper was visually recognized at the time of completion of the rubbing operation performed 200 times, but color transfer from the white image to the rubbing paper was not visually recognized at the time of completion of the rubbing operation performed 100 times.
C: Color transfer from the white image to the rubbing paper was visually recognized at the time of completion of the rubbing operation performed 100 times, but color transfer from the white image to the rubbing paper was not visually recognized at the time of completion of the rubbing operation performed 20 times.
D: Color transfer from the white image to the rubbing paper was visually recognized at the time of completion of the rubbing operation performed 20 times.

### [Test Numbers 101 to 106]

The same operation as in Test Number 2 was performed except that the white ink shown in Table 4 was used as the white ink and the amount of the white ink applied was adjusted so that the Wet film thickness (µm) was the value shown in Table 4.

The results are shown in Table 4.

### [Test Numbers 201 to 228]

The same operation as in Test Number 2 was performed except that the conditions of hot air drying (the temperature of hot air and the wind speed of hot air) were changed as shown in Table 5.

The results are shown in Table 5.

### [Test Numbers 301 to 306]

The same operation as in Test Number 2 was performed except that the tension applied to the non-permeable substrate was adjusted to change the contact surface pressure between the white image and the transport roll T1 as shown in Table 6.

The results are shown in Table 6.

**[Table 2]**

| Test No. | White image recording condition | | | | | | | | | | | | | Evaluation result | | | | Notes |
|---|---|---|---|---|---|---|---|---|---|---|---|---|---|---|---|---|---|---|
| | White ink | X | Heating and drying method | Y | X * Y | Hot air | | Z | X * Z | A | B | A/B | Contact surface pressure with transport roller T1 | Covering property | Adhesiveness | In-plane unevenness | Rub resistance | |
| | | Viscosity of concentrated ink | | Temperature rising rate | | Air temperature | Wind speed | Wind speed /Air temperature | | Dry film thickness | Wet film thickness | | | | | | | |
| | | mPa·s | | °C/s | | °C | m/s | - | | µm | µm | | N/m² | | | | | |
| 1 | W1 | 11.6 | Hot air | 2.4 | 28 | 60 | 10 | 0.17 | 0.9 | 0.53 | 6.70 | 0.08 | 750 | D | A | A | C | Com. |
| 2 | W2 | 15.4 | | 2.4 | 37 | 60 | 10 | 0.17 | 1.7 | 0.75 | 6.70 | 0.11 | | C | A | A | C | Ex. |
| 3 | W3 | 16.5 | | 2.4 | 40 | 60 | 10 | 0.17 | 2.7 | 1.09 | 6.70 | 0.16 | | B | A | A | B | Ex. |
| 4 | W4 | 19.5 | | 2.4 | 47 | 60 | 10 | 0.17 | 2.9 | 0.99 | 6.70 | 0.15 | | B | A | A | B | Ex. |
| 5 | W1 | 11.6 | air Hot | 3.0 | 35 | 70 | 10 | 0.14 | 1.1 | 0.64 | 6.70 | 0.10 | 750 | C | A | A | C | Ex. |
| 6 | W2 | 15.4 | | 3.0 | 46 | 70 | 10 | 0.14 | 2.1 | 0.91 | 6.70 | 0.14 | | B | A | A | B | Ex. |
| 7 | W3 | 16.5 | | 3.0 | 50 | 70 | 10 | 0.14 | 3.3 | 1.36 | 6.70 | 0.20 | | A | A | A | B | Ex. |
| 8 | W4 | 19.5 | | 3.0 | 59 | 70 | 10 | 0.14 | 3.6 | 1.22 | 6.70 | 0.18 | | A | A | A | A | Ex. |
| 9 | W1 | 11.6 | IR | 3.3 | 38 | - | - | - | - | 0.70 | 6.70 | 0.10 | 750 | C | A | A | C | Ex. |
| 10 | W2 | 15.4 | | 3.3 | 51 | - | - | - | - | 1.05 | 6.70 | 0.16 | | B | A | A | B | Ex. |
| 11 | W3 | 16.5 | | 3.3 | 54 | - | - | - | - | 1.45 | 6.70 | 0.22 | | A | B | A | B | Ex. |
| 12 | W4 | 19.5 | | 3.3 | 64 | - | - | - | - | 1.34 | 6.70 | 0.20 | | A | A | A | B | Ex. |
| 13 | W1 | 11.6 | Heating drum | 3.1 | 36 | - | - | - | - | 0.68 | 6.70 | 0.10 | 750 | C | A | A | C | Ex. |
| 14 | W2 | 15.4 | | 3.1 | 48 | - | - | - | - | 0.95 | 6.70 | 0.14 | | B | A | A | B | Ex. |
| 15 | W3 | 16.5 | | 3.1 | 51 | - | - | - | - | 1.42 | 6.70 | 0.21 | | A | B | A | B | Ex. |
| 16 | W4 | 19.5 | | 3.1 | 60 | - | - | - | - | 1.36 | 6.70 | 0.20 | | A | A | A | B | Ex. |
| 17 | W1 | 11.6 | Hot air | 4.3 | 50 | 60 | 18 | 0.30 | 1.4 | 0.78 | 6.70 | 0.12 | 750 | B | A | A | C | Ex. |
| 18 | W2 | 15.4 | | 4.3 | 66 | 60 | 18 | 0.30 | 2.3 | 1.00 | 6.70 | 0.15 | | B | A | A | B | Ex. |
| 19 | W3 | 16.5 | | 4.3 | 71 | 60 | 18 | 0.30 | 3.7 | 1.49 | 6.70 | 0.22 | | A | B | A | A | Ex. |
| 20 | W4 | 19.5 | | 4.3 | 84 | 60 | 18 | 0.30 | 3.9 | 1.34 | 6.70 | 0.20 | | A | A | A | A | Ex. |
| 21 | W1 | 11.6 | Hot air | 5.1 | 59 | 70 | 18 | 0.26 | 1.4 | 0.80 | 6.70 | 0.12 | 750 | B | A | A | C | Ex. |
| 22 | W2 | 15.4 | | 5.1 | 79 | 70 | 18 | 0.26 | 2.4 | 1.05 | 6.70 | 0.16 | | B | A | A | B | Ex. |
| 23 | W3 | 16.5 | | 5.1 | 84 | 70 | 18 | 0.26 | 3.7 | 1.52 | 6.70 | 0.23 | | A | B | A | A | Ex. |
| 24 | W4 | 19.5 | | 5.1 | 99 | 70 | 18 | 0.26 | 4.2 | 1.45 | 6.70 | 0.22 | | A | B | A | A | Ex. |

**[Table 3]**

| Test No. | White image recording condition | | | | | | | | | | | | | Evaluation result | | | | Notes |
|---|---|---|---|---|---|---|---|---|---|---|---|---|---|---|---|---|---|---|
| | White ink | X | Heating and drying method | Y | X* Y | Hot air | | Z | X * Z | A | B | A/B | Contact surface pressure with transport roller T1 | Covering property | Adhesiveness | In-plane unevenness | Rub resistance | |
| | | Viscosity of concentrated ink | | Temperature rising rate | | Air temperature | Wind speed | Wind speed /Air temperature | | Dry film thickness | Wet film thickness | | | | | | | |
| | | mPa·s | | °C/s | | °C | m/s | - | | µm | µm | | N/m² | | | | | |
| 25 | W1 | 11.6 | Hot air | 9.6 | 111 | 90 | 25 | 0.28 | 1.5 | 0.86 | 6.70 | 0.13 | 750 | B | A | A | C | Ex. |
| 26 | W2 | 15.4 | | 9.6 | 148 | 90 | 25 | 0.28 | 2.8 | 1.23 | 6.70 | 0.18 | | B | A | A | B | Ex. |
| 27 | W3 | 16.5 | | 9.6 | 158 | 90 | 25 | 0.28 | 4.4 | 1.78 | 6.70 | 0.27 | | A | B | A | A | Ex. |
| 28 | W4 | 19.5 | | 9.6 | 187 | 90 | 25 | 0.28 | 4.8 | 1.65 | 6.70 | 0.25 | | A | B | A | A | Ex. |
| 29 | W1 | 11.6 | Hot air | 12.4 | 144 | 90 | 32 | 0.36 | 1.7 | 0.96 | 6.70 | 0.14 | 750 | B | A | A | C | Ex. |
| 30 | W2 | 15.4 | | 12.4 | 191 | 90 | 32 | 0.36 | 3.1 | 1.37 | 6.70 | 0.20 | | A | A | A | B | Ex. |
| 31 | W3 | 16.5 | | 12.4 | 205 | 90 | 32 | 0.36 | 5.0 | 2.02 | 6.70 | 0.30 | | A | C | A | A | Ex. |
| 32 | W4 | 19.5 | | 12.4 | 242 | 90 | 32 | 0.36 | 5.4 | 1.85 | 6.70 | 0.28 | | A | C | A | A | Ex. |
| 33 | W1 | 11.6 | IR | 13.0 | 151 | - | - | - | - | 1.10 | 6.70 | 0.16 | 750 | B | A | A | C | Ex. |
| 34 | W2 | 15.4 | | 13.0 | 200 | - | - | - | - | 1.51 | 6.70 | 0.23 | | A | B | A | B | Ex. |
| 35 | W3 | 16.5 | | 13.0 | 215 | - | - | - | - | 2.14 | 6.70 | 0.32 | | A | C | A | B | Ex. |
| 36 | W4 | 19.5 | | 13.0 | 254 | - | - | - | - | 2.02 | 6.70 | 0.30 | | A | C | A | B | Ex. |
| 37 | W1 | 11.6 | Heating drum | 128 | 148 | - | - | - | - | 1.03 | 6.70 | 0.15 | 750 | B | A | A | C | Ex. |
| 38 | W2 | 15.4 | | 128 | 197 | - | - | - | - | 1.45 | 6.70 | 0.22 | | A | B | A | B | Ex. |
| 39 | W3 | 16.5 | | 12.8 | 211 | - | - | - | - | 2.02 | 6.70 | 0.30 | | A | C | A | B | Ex. |
| 40 | W4 | 19.5 | | 12.8 | 250 | - | - | - | - | 1.92 | 6.70 | 0.29 | | A | C | A | B | Ex. |
| 41 | W1 | 11.6 | Hot air | 15.0 | 174 | 110 | 32 | 0.29 | 1.9 | 1.12 | 6.70 | 0.17 | 750 | B | A | A | C | Ex. |
| 42 | W2 | 15.4 | | 15.0 | 231 | 110 | 32 | 0.29 | 3.7 | 1.59 | 6.70 | 0.24 | | A | C | A | A | Ex. |
| 43 | W3 | 16.5 | | 15.0 | 248 | 110 | 32 | 0.29 | 5.9 | 2.38 | 6.70 | 0.36 | | A | C | A | A | Ex. |
| 44 | W4 | 19.5 | | 15.0 | 293 | 110 | 32 | 0.29 | 6.2 | 2.14 | 6.70 | 0.32 | | A | D | A | A | Com. |

**[Table 4]**

| Test No. | White image recording condition | | | | | | | | | | | | | Evaluation result | | | | Notes |
|---|---|---|---|---|---|---|---|---|---|---|---|---|---|---|---|---|---|---|
| | White ink | X | Heating and drying method | Y | X* Y | Hot air | | Z | X * Z | A | B | A/B | Contact surface pressure with transport roller T1 | Covering property | Adhesiveness | In-plane unevenness | Rub resistance | |
| | | Viscosity of concentrated ink | | Temperature rising rate | | Air temperature | Wind speed | Wind speed /Air temperature | | Dry film thickness | Wet film thickness | | | | | | | |
| | | mPa·s | | °C/s | | °C | m/s | - | | µm | µm | | N/m² | | | | | |
| 101 | W2 | 15.4 | Hot air | 3.4 | 52 | 80 | 10 | 0.13 | 2.6 | 0.77 | 4.50 | 0.17 | 750 | B | A | A | B | Ex. |
| 102 | W1 | 15.4 | | 5.3 | 82 | 70 | 18 | 0.26 | 3.0 | 0.87 | 4.50 | 0.19 | | B | A | A | B | Ex. |
| 103 | W1 | 15.4 | | 9.8 | 151 | 90 | 25 | 0.28 | 3.6 | 1.04 | 4.50 | 0.23 | | B | B | A | A | Ex. |
| 104 | W1 | 15.4 | Hot air | 2.8 | 43 | 80 | 10 | 0.13 | 2.1 | 1.41 | 10.40 | 0.14 | 750 | A | A | A | B | Ex. |
| 105 | W1 | 15.4 | | 4.8 | 74 | 70 | 18 | 0.26 | 2.4 | 1.65 | 10.40 | 0.16 | | A | A | A | B | Ex. |
| 106 | W1 | 15.4 | | 9.1 | 140 | 90 | 25 | 0.28 | 2.7 | 1.82 | 10.40 | 0.18 | | A | A | A | B | Ex. |

**[Table 5]**

| Test No. | White image recording condition | | | | | | | | | | | | | Evaluation result | | | | Notes |
|---|---|---|---|---|---|---|---|---|---|---|---|---|---|---|---|---|---|---|
| | White ink | X | Heating and drying method | Y | X * Y | Hot air | | Z | X * Z | A | B | A/B | Contact surface pressure with transport roller T1 | Covering property | Adhesiveness | In-plane unevenness | Rub resistance | |
| | | Viscosity of concentrated ink | | Temperature rising rate | | Air temperature | Wind speed | Wind speed /Air temperature | | Dry film thickness | Wet film thickness | | | | | | | |
| | | mPa·s | | °C/s | | °C | m/s | - | | µm | µm | | N/m² | | | | | |
| 201 | W2 | 15.4 | Hot air | 0.7 | 12 | 35 | 5 | 0.14 | 2.2 | 0.78 | 6.70 | 0.12 | 750 | D | A | A | B | Com. |
| 202 | W2 | 15.4 | | 2.1 | 33 | 100 | 5 | 0.05 | 0.8 | 0.86 | 6.70 | 0.13 | | C | A | A | C | Ex. |
| 203 | W2 | 15.4 | | 5.1 | 79 | 120 | 5 | 0.04 | 0.6 | 1.02 | 6.70 | 0.15 | | B | A | A | C | Ex. |
| 204 | W2 | 15.4 | Hot air | 1.5 | 23 | 35 | 10 | 0.29 | 4.4 | 0.83 | 6.70 | 0.12 | 750 | D | A | A | A | Com. |
| 205 | W2 | 15.4 | | 2.8 | 43 | 65 | 10 | 0.15 | 2.4 | 0.90 | 6.70 | 0.13 | | B | A | A | B | Ex. |
| 206 | W2 | 15.4 | | 3.4 | 53 | 80 | 10 | 0.13 | 1.9 | 0.93 | 6.70 | 0.14 | | B | A | A | C | Ex. |
| 207 | W2 | 15.4 | | 5.1 | 79 | 120 | 10 | 0.08 | 1.3 | 1.02 | 6.70 | 0.15 | | B | A | A | C | Ex. |
| 208 | W2 | 15.4 | Hot air | 2.7 | 41 | 35 | 18 | 0.51 | 7.9 | 0.89 | 6.70 | 0.13 | 750 | B | A | A | A | Ex. |
| 209 | W2 | 15.4 | | 6.2 | 95 | 80 | 18 | 0.23 | 3.5 | 1.08 | 6.70 | 0.16 | | B | A | A | A | Ex. |
| 210 | W2 | 15.4 | | 9.2 | 142 | 120 | 18 | 0.15 | 2.3 | 1.25 | 6.70 | 0.19 | | B | A | A | B | Ex. |
| 211 | W2 | 15.4 | Hot air | 3.7 | 58 | 35 | 25 | 0.71 | 11.0 | 0.95 | 6.70 | 0.14 | 750 | B | A | C | A | Ex. |
| 212 | W2 | 15.4 | | 8.5 | 132 | 80 | 25 | 0.31 | 4.8 | 1.21 | 6.70 | 0.18 | | B | A | A | A | Ex. |
| 213 | W2 | 15.4 | | 128 | 197 | 120 | 25 | 0.21 | 3.2 | 1.45 | 6.70 | 0.22 | | A | B | A | B | Ex. |
| 214 | W2 | 15.4 | Hot air | 4.8 | 74 | 35 | 32 | 0.91 | 14.1 | 1.01 | 6.70 | 0.15 | 750 | B | A | C | A | Ex. |
| 215 | W2 | 15.4 | | 6.8 | 105 | 50 | 32 | 0.64 | 9.9 | 1.12 | 6.70 | 0.17 | | B | A | B | A | Ex. |
| 216 | W2 | 15.4 | | 10.9 | 168 | 80 | 32 | 0.40 | 6.2 | 1.34 | 6.70 | 0.20 | | A | A | A | A | Ex. |
| 217 | W2 | 15.4 | | 16.4 | 253 | 120 | 32 | 0.27 | 4.1 | 1.64 | 6.70 | 0.24 | | A | C | A | B | Ex. |
| 218 | W2 | 15.4 | Hot air | 6.0 | 92 | 35 | 40 | 1.14 | 17.6 | 1.07 | 6.70 | 0.16 | 750 | B | A | C | A | Ex. |
| 219 | W2 | 15.4 | | 8.5 | 132 | 50 | 40 | 0.80 | 12.3 | 1.21 | 6.70 | 0.18 | | B | A | C | A | Ex. |
| 220 | W2 | 15.4 | | 13.7 | 211 | 80 | 40 | 0.50 | 7.7 | 1.49 | 6.70 | 0.22 | | A | C | B | A | Ex. |
| 221 | W2 | 15.4 | | 17.1 | 263 | 120 | 40 | 0.33 | 5.1 | 1.68 | 6.70 | 0.25 | | A | C | A | A | Ex. |
| 222 | W2 | 15.4 | Hot air | 11.9 | 183 | 140 | 18 | 0.13 | 2.0 | 1.39 | 6.70 | 0.21 | 750 | A | B | A | B | Ex. |
| 223 | W2 | 15.4 | | 15.6 | 240 | 180 | 18 | 0.10 | 1.5 | 1.60 | 6.70 | 0.24 | | A | C | A | C | Ex. |
| 224 | W2 | 15.4 | Hot air | 14.6 | 225 | 140 | 25 | 0.18 | 2.8 | 1.54 | 6.70 | 0.23 | 750 | A | C | A | B | Ex. |
| 225 | W2 | 15.4 | | 169 | 260 | 160 | 25 | 0.16 | 2.4 | 1.67 | 6.70 | 0.25 | | A | C | A | B | Ex. |
| 226 | W2 | 15.4 | | 19.1 | 294 | 180 | 25 | 0.14 | 2.1 | 1.82 | 6.70 | 0.27 | | A | D | A | B | Com. |
| 227 | W2 | 15.4 | Hot air | 18.2 | 280 | 140 | 32 | 0.23 | 3.5 | 1.74 | 6.70 | 0.26 | 750 | A | C | A | B | Ex. |
| 228 | W2 | 15.4 | | 20.3 | 313 | 160 | 32 | 0.20 | 3.1 | 1.85 | 6.70 | 0.28 | | A | D | A | B | Com. |

**[Table 6]**

| Test No. | White image recording condition | | | | | | | | | | | | | Evaluation result | | | | Notes |
|---|---|---|---|---|---|---|---|---|---|---|---|---|---|---|---|---|---|---|
| | White ink | X | Heating and drying method | Y | X * Y | Hot air | | Z | X * Z | A | B | A/B | Contact surface pressure with transport roller T1 | Covering property | Adhesiveness | In-plane unevenness | Rub resistance | |
| | | Viscosity of concentrated ink | | Temperature rising rate | | Air temperature | Wind speed | Wind speed /Air temperature | | Dry film thickness | Wet film thickness | | | | | | | |
| | | mPa·s | | °C/s | | °C | m/s | - | | µm | µm | | N/m² | | | | | |
| 301 | W3 | 16.5 | Hot air | 5.1 | 84 | 70 | 18 | 0.26 | 4.2 | 1.52 | 6.70 | 0.23 | 375 | A | B | B | B | Ex. |
| 302 | | | | | | | | | | 1.52 | 6.70 | 0.23 | 500 | A | B | B | B | Ex. |
| 303 | | | | | | | | | | 1.52 | 6.70 | 0.23 | 750 | A | B | B | B | Ex. |
| 304 | | | | | | | | | | 1.52 | 6.70 | 0.23 | 1500 | A | B | B | B | Ex. |
| 305 | | | | | | | | | | 1.40 | 6.70 | 0.21 | 4000 | A | B | B | B | Ex. |
| 306 | | | | | | | | | | 1.28 | 6.70 | 0.19 | 4500 | B | B | B | B | Ex. |

As shown in Tables 2 to 6, each of Examples (Ex.) in which the product (X * Y) was 30 to 280 had excellent covering properties of the white image, as compared with Comparative Examples (Com.) in which the product (X * Y) was less than 30. From the Test Number 1 (Comparative Example) and the Test Numbers 2, 5, 9, and 13 (all Examples), it can be seen that the effect of improving the covering property due to the product (X * Y) of 30 or more is obtained regardless of the drying method.

In addition, each Example (Ex.) was excellent in the adhesiveness of the white image as compared with the Comparative Example (Com.) in which the product (X * Y) was more than 280. From the Test Number 44 (Comparative Example) and the Test Numbers 32, 36, 40, and 43 (all Examples), it can be seen that the effect of improving the adhesiveness is obtained by setting the product (X * Y) to 280 or less, regardless of the drying method.

For example, from the comparison between Test Number 2 and Test Number 3, it can be seen that the covering property of the white image is further improved in a case where the product (X * Y) is 40 or more.

For example, from the comparison between Test Number 33 and Test Number 34, it can be seen that the adhesiveness of the white image is further improved in a case where the product (X * Y) is 200 or less.

For example, from the comparison of Test Numbers 8, 12, and 16, it can be seen that in a case where the heating and drying method is hot air drying, the rub resistance of the white image is further improved as compared with a case where the heating and drying method is IR drying and heating drum drying.

For example, from the comparison between Test Number 205 and Test Number 206, it can be seen that in a case where the heating and drying method is hot air drying, the rub resistance of the white image is further improved in a case where the product (X * Z) is 2.0 or more.

For example, from the comparison between Test Number 214 and Test Number 215, it can be seen that, in a case where the method of heating and drying is hot air drying, and the product (X * Z) is 10.0 or less, the in-plane unevenness of the white image is further suppressed.

For example, from the comparison between Test Number 209 and Test Number 210, it can be seen that in a case where the method of heating and drying is hot air drying, the rub resistance of the white image is further improved in a case where the product (X * Z) is 3.5 or more.

For example, from the comparison between Test Number 215 and Test Number 216, it can be seen that, in a case where the method of heating and drying is hot air drying, the in-plane unevenness of the white image is further suppressed in a case where the product (X * Z) is 7.5 or less.

For example, from the comparison between Test Number 11 and Test Number 12, it can be seen that in a case where A/B, which is a value obtained by dividing the Dry film thickness by the Wet film thickness of the white ink, is 0.20 or less, the adhesiveness of the white image is further improved.

For example, from the comparison between Test Number 29 and Test Number 30, it can be seen that the covering property of the white image is further improved in a case where the Dry film thickness of the white ink is 1.30 µm or more.

For example, from the comparison between Test Number 28 and Test Number 32, it can be seen that the adhesiveness of the white image is further improved in a case where the Dry film thickness of the white ink is 1.80 µm or less.

For example, from the comparison between Test Number 305 and Test Number 306, it can be seen that the covering property of the white image is further improved in a case where the contact surface pressure between the transport roller T1 and the white ink is 4000 N/m² or less.

Although the evaluation is omitted, in a case where the contact surface pressure between the transport roller T1 and the white ink is 750 N/m² or more, the transportability by the transport roller T1 is further improved.

In the above-described examples, a white image was recorded using the pretreatment liquid and the white ink as the second ink without using the colored ink (that is, the cyan ink, the black ink, the magenta ink, and the yellow ink) as the first ink.

In comparison with these Examples, even in a case where a colored pattern image (characters, figures, and the like) is recorded using at least one of the colored inks (that is, the cyan ink, the black ink, the magenta ink, and the yellow ink) as the first ink, and then a white image (solid image) is recorded as the background image using the white ink as the second ink to cover the colored pattern image, a white image having excellent covering property and adhesiveness can be obtained in the same manner as in the above-described examples. In this case, even in a case where the first ink is a white ink and the second ink is a colored ink, a white image having excellent covering property and adhesiveness is obtained in the same manner as in the above-described examples.

In addition, even in a case where the application of the pretreatment liquid is omitted in the examples described above, a white image having excellent covering property and adhesiveness is obtained in the same manner as in the examples described above.

The entire content of the present disclosure of Japanese Patent Application No. 2022-150263, filed September 21, 2022, is incorporated in this specification by reference.

All documents, patent applications, and technical standards described in the present specification are herein incorporated by reference to the same extent that each individual document, patent application, or technical standard was specifically and individually indicated to be incorporated by reference.

## Claims

1. An image recording method comprising:
a recording step of applying a white ink containing water, a white pigment, and a resin onto one surface of a non-permeable substrate by an ink jet method and heating and drying the applied white ink to record a white image,
wherein, in a case where a viscosity at 32°C of a concentrated ink obtained by concentrating the white ink until a mass of the white ink is reduced by 30% is denoted by X mPa·s and a temperature rising rate from a start point of the heating and drying to a point of 5 seconds later is denoted by Y °C/s, a product of X and Y is 30 to 280.

2. The image recording method according to claim 1,
wherein the product of the X and the Y is 40 to 200.

3. The image recording method according to claim 1,
wherein the heating and drying is performed by blowing hot air, and in a case where a value obtained by dividing a wind speed of the hot air in a unit of m/s by a temperature of the hot air in a unit of °C is denoted by Z, a product of the X and Z is 2.0 to 10.0.

4. The image recording method according to claim 3,
wherein the product of the X and the Z is 3.5 to 7.5.

5. The image recording method according to claim 1,
wherein a value obtained by dividing a film thickness of the white ink applied onto the one surface of the non-permeable substrate after the heating and drying by a film thickness of the white ink applied onto the one surface of the non-permeable substrate before the heating and drying is 0.10 to 0.20.

6. The image recording method according to claim 5,
wherein the film thickness of the white ink applied onto the one surface of the non-permeable substrate after the heating and drying is 1.30 µm to 1.80 µm.

7. The image recording method according to claim 1,
wherein the recording step further includes transporting the non-permeable substrate onto which the white ink has been applied by a transport member so as to be in a disposition in which the transport member and the white ink are in contact with each other,
the image recording method further includes a winding step of winding the non-permeable substrate onto which the white image has been recorded after the recording step, and
an average contact surface pressure between the transport member and the white ink during a period from the application of the white ink to the winding of the non-permeable substrate is 750 N/m² to 4000 N/m².

8. The image recording method according to claim 1,
wherein the recording step further includes recording a colored image by applying a colored ink containing water, a coloring pigment, and a resin onto the one surface of the non-permeable substrate by an ink jet method.

9. The image recording method according to claim 8,
wherein the colored image is recorded before the white image and is disposed between the non-permeable substrate and the white image.

10. The image recording method according to claim 1, further comprising:
before the recording step, a step of applying a pretreatment liquid containing water and an aggregating agent onto the one surface of the non-permeable substrate,
wherein, in the recording step, the white ink is applied onto a region on the one surface onto which the pretreatment liquid has been applied, to record the white image.

11. An image recording apparatus that is used in the image recording method according to any one of claims 1 to 10, the image recording apparatus comprising:
an ink jet head configured to apply the white ink onto the one surface of the non-permeable substrate; and
a heating and drying device configured to perform heating and drying on the applied white ink,
wherein the product of the X and the Y is 30 to 280.
